# EUROPÄISCHE PATENTSCHRIFT

(11) **EP 3 947 034 B1**
(45) Veröffentlichungstag und Bekanntmachung des Hinweises auf die Patenterteilung: **31.01.2024**
(21) Anmeldenummer: 20717146.3
(22) Anmeldetag: 01.04.2020
(51) Int. Cl.: B60N 2/34, B60N 2/64, B60N 2/68, B60N 2/90

(54) **STRUKTURBAUTEIL, SITZKOMPONENTE UND FAHRZEUGSITZ**
STRUCTURAL COMPONENT, SEAT COMPONENT AND VEHICLE SEAT
PIÈCE STRUCTURALE, COMPOSANT DE SIÈGE ET SIÈGE DE VÉHICULE

(30) Priorität: 01.04.2019 DE 102019204571; 01.04.2019 DE 102019204577; 01.04.2019 DE 102019204580; 01.04.2019 DE 102019204584
(43) Veröffentlichungstag der Anmeldung: 09.02.2022
(73) Patentinhaber: Adient US LLC, Plymouth, MI 48170 (US)
(72) Erfinder: FROTZ, Thomas, 42929 Wermelskirchen (DE); BAHR, Daniel, 51515 Kürten (DE); HEMMELRATH, Rudolf Wilhelm, 51377 Leverkusen (DE); OLDACH, Sven, 42857 Remscheid (DE)
(74) Vertreter: Liedhegener, Ralf
(86) Internationale Anmeldenummer: PCT/EP2020/059309
(87) Internationale Veröffentlichungsnummer: WO 2020/201384

(56) Entgegenhaltungen:
- DE-B3-102005 054 125
- GB-A- 1 140 157
- US-A1- 2006 033 369
- US-A1- 2012 119 551

## Beschreibung

Die Erfindung betrifft ein Strukturbauteil für einen Sitz, insbesondere einen Fahrzeugsitz. Des Weiteren betrifft die Erfindung eine Sitzkomponente und einen Fahrzeugsitz.

Strukturbauteile für einen Sitz sind allgemein bekannt. Solche Strukturbauteile weisen meist einen faserverstärkten thermoplastischen Kunststoff mit integrierten Faserverstärkungen auf. Um den Sitz in verschiedene Positionen, wie eine Sitzkomfortposition, eine Bettposition oder eine geklappte Position zu stellen, ist der Sitz mehrteilig, zum Beispiel aus einer Rückenlehne, einem Sitzteil und einem Fußteil gebildet, die mittels Dreh- oder Rastbeschlägen drehbar miteinander verbunden sind.

Die GB 1 140 157 A offenbart ein rotationsgeformtes Kunststoff-Stuhl-Element mit einem oder mehreren internen, verstärkenden Brückenelementen, die eine Vorderseite und eine Rückseite des Stuhls einstückig miteinander verbinden. Die Brückenelemente dienen einer Versteifung des Stuhls. Das Stuhl-Element wird geformt, indem flüssiges Kunststoffmaterial einer Drehform zugeführt wird, die mit einem oder mehreren Vorsprüngen versehen ist, die sich von einer Seite zur gegenüberliegenden Seite der Form entsprechend den Brückenelementen erstrecken. Geeignete Kunststoffmaterialien sind Polyethylen, Polypropylen, Polyvinylchlorid, ABS und Polystyrol.

Die US 2012/0119551 A1 offenbart ein Strukturbauteil, welches eine flexible Struktur umfasst, wobei die flexible Struktur durch einen Insassen bewegbar ist. Die Struktur ist als ein flexibles Gitter mit mehreren Hebelelementen ausgebildet. Die Hebelelemente sind mittels Gelenken einerseits an einer Vorderseite der flexiblen Struktur und andererseits an einer rückwärtigen Fläche der flexiblen Struktur angelenkt. Eine Verformung der flexiblen Struktur erfolgt unmittelbar durch einen Insassen oder mittelbar durch auf das Fahrzeug und somit den Insassen wirkende Kräfte.

Die US 2006/033369 A1 offenbart eine Rückenlehne mit einem vorderen Stützbereich, einer mit dem Stützbereich verbundenen Struktur, die sich von einem oberen Bereich der Rückenlehne zu einem unteren Bereich der Rückenlehne erstreckt. Ein Druckelement verbindet den oberen Bereich des Stützbereichs mit dem unteren Bereich des Stützbereichs. Druckelemente und Zugelemente sind im oberen und im unterem Endbereich des Stützbereichs unverschiebbar miteinander verbunden. Das Zugelement und das Druckelement zwischen den Endbereichen sind mittels Abstandhalter gegeneinander verschiebbar miteinander verbunden.

Die DE 10 2005 054 125 B3 offenbart einen Personensitz mit Rückenlehne und Sitzteil, wobei die Rückenlehne eine Rückwand und eine dazu beabstandete, flexible Vorderwand aufweist. Zwischen der Rückwand und der Vorderwand sind um in Breitenrichtung der Rückenlehne verlaufende Achsen schwenkbare, unflexible und voneinander beabstandete Streben angeordnet. Die Streben verlaufen ausgehend von der Rückwand in einem Lendenwirbelbereich der Rückenlehne schräg nach unten zur Vorderwand und in einem Schulterbereich der Rückenlehne schräg nach oben zur Vorderwand hin, wobei durch die Schrägstellung der Streben ein Winkel zwischen den Streben und jeweils einer zur Rückwand Senkrechten sowie Abstände zwischen Rückwand und der Vorderwand veränderbar sind. Sämtliche Winkel zwischen den Streben und der zu der Rückwand Senkrechten sind durch Verschieben der Rückwand gegenüber der Vorderwand veränderbar.

Aufgabe der Erfindung ist es, ein Strukturbauteil anzugeben, welches einfach in eine von mehreren Positionen verstellbar ist und dabei auftretende Lasten und Kräfte kompensiert und aufnimmt. Darüber hinaus ist es Aufgabe der Erfindung, eine verbesserte Sitzkomponente, bei welcher verschiedene Abstützungsvarianten einfach einstellbar sind, und einen Sitz mit einer solchen verbesserten Sitzkomponente anzugeben.

Hinsichtlich des Strukturbauteils wird die Aufgabe durch die Merkmale des Patentanspruchs 1 gelöst. Hinsichtlich der Sitzkomponente wird die Aufgabe durch die Merkmale des Patentanspruchs 11 gelöst. Hinsichtlich des Sitzes wird die Aufgabe durch die Merkmale des Patentanspruchs 14 gelöst.

Weiterbildungen der Erfindung sind Gegenstand der abhängigen Patentansprüche.

Die Aufgabe wird erfindungsgemäß gelöst durch ein Strukturbauteil, insbesondere ein kinetisches Strukturbauteil, welches eine flexible Struktur mit mindestens einem Freiheitsgrad, insbesondere mindestens einem translatorischen Freiheitsgrad und/oder mindestens einem Rotationsfreiheitsgrad, umfasst, wobei die flexible Struktur zwischen einer komprimierten Stellung und einer expandierten Stellung oder umgekehrt bewegbar ist, und wobei die flexible Struktur mindestens einen Teilbereich oder eine Teilstruktur umfasst, die eingerichtet ist, in der expandierten Stellung zu einer Kurve oder Bogen und/oder linear zu expandieren. Die Teilstruktur ist als ein flexibles Gitter mit mehreren Hebelelementen ausgebildet, wobei die Hebelelemente mittels Gelenken an mindestens einem Bewegungsglied angelenkt sind, wobei die Gelenke als Filmscharniere oder Filmgelenke aus Polypropylen ausgebildet sind.

Darüber hinaus ist der Teilbereich oder die Teilstruktur der flexiblen Struktur eingerichtet, in der komprimierten Stellung der flexiblen Struktur zu einer weitgehend ebenen oder geraden Fläche zu komprimieren.

Dabei können in die flexible Struktur einwirkende Kräfte, wie zum Beispiel gesteuerte Druck- oder Schubkräfte, aufgenommen und weitergeleitet werden, um Volumen, Form, Abmaße und/oder Position der flexiblen Struktur, insbesondere von Teilbereichen dieser, während der Expansion oder Komprimierung zu ändern, insbesondere kurven- oder bogenförmig und/oder linear, zu bewegen. Beispielsweise können in die flexible Struktur einwirkende Kräfte, wie zum Beispiel gesteuerte Druck- oder Schubkräfte, aufgenommen und weitergeleitet werden, um Form, Abmaße und/oder Position der flexiblen Struktur, insbesondere von Teilbereichen dieser, zu ändern, insbesondere linear zu bewegen und/oder zu kippen oder neigen. Beispielsweise wird oder werden Teilbereiche oder Teilstrukturen während der Expansion derart bewegt, insbesondere aufgestellt, gekippt, geneigt oder aufgefaltet, dass der Teilbereich bzw. die Teilstruktur bei einer Expansion eine bogen- oder kurvenförmige Außenfläche oder eine linear aufgeweitete Form, insbesondere eine lineare Aufweitung oder Ausdehnung, aufweist. Während der Komprimierung wird oder werden der/die Teilbereich/e oder - struktur/en zurückbewegt, insbesondere zusammengeklappt oder zusammengefaltet.

Insbesondere umfasst die Teilstruktur eine Mehrzahl von Expansionselementen, welche in Reihe und/oder parallel miteinander gelenkig gekoppelt sind, um in dem mindestens einen Freiheitsgrad, insbesondere in mindestens zwei oder mehr Freiheitsgraden, in die expandierte Stellung zu expandieren oder in die komprimierte Stellung zu komprimieren.

Beispielsweise ist die flexible Struktur oder auch die Teilstruktur als eine monolithische flexible Struktur ausgebildet. Insbesondere umfasst die flexible Struktur eine Mehrzahl von Expansionselementen, wie Gliedern, Gelenken und/oder Hebeln, welche in Reihe und/oder parallel miteinander verbunden sind, um in dem mindestens einen Freiheitsgrad, insbesondere in mindestens zwei oder mehr Freiheitsgraden zu expandieren oder zu komprimieren.

Die Teilstruktur ist als ein flexibles Gitter mit mehreren Hebelelementen ausgebildet, wobei die Hebelelemente mittels Hebelgelenken an mindestens einem Bewegungsglied angelenkt sind.

Die Hebelgelenke sind als Filmscharniere oder Filmgelenke ausgebildet. Filmscharniere oder Filmgelenke sind insbesondere sogenannte Bandscharniere und sind nicht aus mechanischen Teilen, wie ein Drehgelenk, gebildet. Filmscharniere oder Filmgelenke sind insbesondere flexible, dünnwandige Gelenkbänder zwischen zwei zu verbindenden Teilen, wie dem Hebelelement und dem Bewegungsglied. Die Filmscharniere oder - gelenke sind bei spritzgegossenen Teilen aus Polypropylen gebildet, aufgrund der nötigen Weichheit und Dehnbarkeit eines solchen Werkstoffs für eine dauerhafte flexible Funktion der Hebelgelenke. Solch dünnwandige Filmscharniere oder -gelenke aus Polypropylen bringen eine hohe Biegewechselfestigkeit mit, so dass die Filmscharniere oder-gelenke ausdauernd und langlebig ausgebildet sind.

Die Hebelelemente sind beispielsweise als Rippen, Stege und/oder Streifen ausgebildet. Die Hebelelemente sind insbesondere als spritzgegossene Teile, zum Beispiel aus einem Elastomer, insbesondere aus thermoplastischen Elastomer, beispielsweise aus Polypropylen oder EPDM, gebildet. Die Hebelelemente können dabei insbesondere aus einem härteren Kunststoff als die Hebelgelenke und/oder einem weicherem Kunststoff als die Bewegungsglieder gebildet sein.

Die Hebelelemente können darüber hinaus beispielsweise rautenförmig angeordnet sein. Insbesondere ist das immer wiederkehrende Hebelelement derart zwischen Längselementen angeordnet, dass das Gitter entlang von Längselementen zueinander gespiegelte Rauten umfasst, welche in Abhängigkeit von der einwirkenden und gesteuerten Kraft ihre Form verändern und sich bewegen, insbesondere linear expandieren oder linear komprimieren. Die jeweilige Raute ist dabei durch parallele und voneinander beabstandete Längselemente gebildet, welche durch die Hebelelemente, zum Beispiel planare Stege, miteinander verbunden sind, die an den Längselementen angelenkt sind. Die wiederkehrenden Hebelelemente zwischen den Längselementen bilden eine parallele und serielle Kinematik, wodurch das Strukturbauteil linear expandiert oder linear komprimiert.

Das eine Ende des jeweiligen Hebelelements oder des jeweiligen Steges von zueinander gespiegelten Rauten ist zur Mitte hin mit einem mittleren Längselement oder einem Mittelteil, insbesondere einem Steuerteil, verbunden. Das mittlere Längselement bildet die Spiegelachse der zueinander gespiegelten Rauten. Das gegenüberliegende Ende des jeweiligen Hebelelements oder des jeweiligen Steges von zueinander gespiegelten Rauten ist mit einem äußeren Längselement oder einer Rautenaußenfläche verbunden, die wiederum mit dem nächsten Kompensationselement verbunden ist oder eine Außenfläche des Gitters und damit die flexible Struktur bildet.

Da die Rautenaußenflächen der Hebelelemente linear expandieren, können diese zu einem expandierenden Gitter verbunden werden. Expandiert das Gitter, bewegen sich die jeweiligen Mittelteile 90° zur Expansion. Steuert man die Bewegung der Mittelteile an, expandiert oder komprimiert das gesamte Gitter und somit die flexible Struktur.

Die Gitter können beliebig skaliert werden, so dass es möglich ist, die Expansion oder Komprimierung und die Stabilität dem gewünschten Einsatz oder der gewünschten Anwendung anzupassen.

Das oder die Bewegungsglied/er ist bzw. sind beispielsweise schmalförmig oder flächenförmig ausgebildet. Beispielsweise ist oder sind das oder die Bewegungsglied/er als Bewegungsrippe/n, -steg/e, -streifen und/oder als Bewegungsfläche/n ausgebildet. Das oder die Bewegungsglied/er ist bzw. sind insbesondere als ein spritzgegossenes Teil, zum Beispiel aus einem härteren Kunststoff als die Hebelelemente und/oder die Hebelgelenke, insbesondere aus einem Thermoplasten, beispielsweise aus PMMA, PC, PC/ABS, gebildet.

Die Hebelgelenke, die Hebelelemente und/oder das oder die Bewegungsglied/er können als ein spritzgegossenes Teil, insbesondere ein spritzgegossenes flexibles Gitter ausgebildet sein. Alternativ kann das flexible Gitter aus gelenkig miteinander gekoppelten Teilen gebildet sein.

Darüber hinaus kann die flexible Struktur von einem oder mehreren, insbesondere äußeren Flächenelementen, insbesondere von einer Polsterung, einem Bezug oder dergleichen, beispielsweise von einem Schaumkissen, einer Schaumschale oder einer Schaumplatte, umgeben sein. Dabei kann oder können das oder die äußere/n Flächenelement/e mit der, insbesondere inneren Teilstruktur bewegungsgekoppelt sein. Beispielsweise ist das äußere Flächenelement mit dem jeweiligen Bewegungsglied der Teilstruktur bewegungsgekoppelt.

Ferner kann das kinetische Strukturbauteil als Monolith aus den äußeren Flächenelementen und der inneren flexiblen Struktur, insbesondere einem flexiblen Gitter mit Hebelgelenken mit horizontaler Drehachse, gebildet sein.

Auch kann die flexible Struktur aus mehreren Teilen, wie zum Beispiel einer Kombination von einer Gitterstruktur und einer Reihenstruktur, gebildet sein.

Dabei kann die flexible Struktur, insbesondere die Teilstruktur, aus einem immer wiederkehrenden mechanischen Expansionselement, insbesondere Hebelelement, gebildet sein, die zu einer Reihe, insbesondere mittels der Bewegungsglieder gelenkig miteinander, verbunden sind. Dabei können die Hebelelemente unterschiedliche Längen aufweisen, so dass die in einer Reihe angeordneten Hebelelemente im expandierten Zustand bogen- oder kurvenförmig aufspannen. Alternativ oder zusätzlich können die Hebelelemente gleiche Längen aufweisen, so dass die in einer Reihe und/oder parallel zueinander angeordneten Hebelelemente linear aufspannen.

Darüber hinaus können Mehrfachreihen von Expansions- oder Hebelelementen, insbesondere eine Doppel- oder Dreifachreihe aus nebeneinander und/oder übereinander angeordneten einzelnen Reihen von Expansionselementen vorgesehen sein.

Die Expansions- oder Hebelelemente sind beispielsweise Z- oder L-förmig ausgebildet. Die Expansions- oder Hebelelemente sind darüber hinaus federelastisch ausgebildet. Insbesondere ist das immer wiederkehrende Expansions- oder Hebelelement derart zwischen den äußeren Flächenelementen angeordnet, dass es in Abhängigkeit von einer einwirkenden und gesteuerten Kraft seine Form verändert und sich bewegt, insbesondere expandiert, insbesondere aufspannt oder auffaltet. Dabei bilden die wiederkehrenden Expansions- oder Hebelelemente eine Reihe einer seriellen Kinematik, wodurch das Strukturbauteil oder Teilbereiche dieses über eine vorgegebene Länge oder die gesamte Länge des Sitzes oder Sitzkomponenten bogen- oder kurvenförmig expandiert/en oder komprimiert/en, indem die Expansions- oder Hebelelemente der Reihe synchron expandieren, insbesondere aufklappen, aufspannen, auffalten oder aufstellen, bzw. synchron komprimieren, insbesondere abklappen, entspannen, zusammenfalten oder zusammenklappen.

Das eine Ende des jeweiligen Expansions- oder Hebelelements, insbesondere eines steg-, streifen-, rippen- oder plattenförmigen Hebels, ist mit einem der äußeren Flächenelemente oder einem Bewegungsglied verbunden, insbesondere an diesem angelenkt. Das gegenüberliegende Ende des jeweiligen Hebelelements ist mit dem anderen äußeren Flächenelement oder einem anderen Bewegungsglied verbunden, insbesondere an diesem angelenkt.

Ein weitere Ausführungsform sieht vor, dass die Teilstruktur derart mit dem oder den äußeren Flächenelement/en bewegungsgekoppelt ist, dass in Abhängigkeit von einer auf das oder die Bewegungsglieder der Teilstruktur einwirkenden und gesteuerten Kraft die Teilstruktur ihre Form, insbesondere ihr Volumen, verändert und sich bewegt, insbesondere expandiert, insbesondere sich aufspannt oder auffaltet, oder komprimiert, insbesondere sich zusammenzieht oder zusammenfaltet.

Steuert man die Bewegung der Expansions- oder Hebelelemente, insbesondere synchron, mittels der Bewegungsglieder und/oder der äußeren Flächenelemente an, expandiert oder komprimiert die gesamte Reihe und somit die flexible Struktur oder eine Teilstruktur. Zur Ansteuerung wird insbesondere eine Bewegungskraft an das oder die äußere/n Flächenelement/e und/oder an das oder die Bewegungsglied/er angelegt.

Die Reihe von Expansions- oder Hebelelementen kann beliebig skaliert werden, so dass es möglich ist, die Expansion oder Komprimierung und die Stabilität dem gewünschten Einsatz oder der gewünschten Anwendung anzupassen.

Hinsichtlich der Sitzkomponente, insbesondere einer Rückenlehne oder einem Sitzteil wird die Aufgabe erfindungsgemäß gelöst, indem die Sitzkomponente zumindest eine Tragstruktur, eine Polsterung und/oder einen Bezug sowie ein Strukturbauteil, wie zuvor beschrieben in all seinen verschiedenen Ausführungsformen, umfasst, wobei zumindest die Teilstruktur mit der Polsterung und/oder dem Bezug bewegungsgekoppelt ist. In einer möglichen Ausführungsform kann das jeweilige Bewegungsglied mit der Polsterung und/oder dem Bezug bewegungsgekoppelt sein. Dabei kann das Strukturbauteil zwischen der Tragstruktur und der Polsterung und/oder dem Bezug angeordnet sein und zumindest einen Teilbereich der Sitzkomponente oder die gesamte Sitzkomponente bilden.

Hinsichtlich eines Sitzes wird die Aufgabe erfindungsgemäß gelöst, indem der Sitz mindestens zwei zueinander bewegliche Sitzkomponenten umfasst, von denen zumindest eine bewegliche Sitzkomponente das zuvor in verschiedenen Ausführungsformen beschriebene Strukturbauteil aufweist, wobei bei einer Bewegung der beweglichen Sitzkomponente relativ zu der anderen Sitzkomponente die flexible Struktur des Strukturbauteils in eine expandierte oder in eine komprimierte Stellung bewegbar ist.

Wird das Strukturbauteil mit der inneren und zuvor beschriebenen flexiblen Struktur für einen Sitz, insbesondere einen Fahrzeug- oder Flugzeugsitz verwendet, wobei Teilbereiche des Sitzes oder einer der Sitzkomponenten, wie eine Lendenstütze, Seitenwangen, aus der insbesondere monolithischen flexiblen Struktur gebildet ist, so kann während einer Verstellung des Sitzes beispielsweise von einer Sitz- in eine Liegeposition die Expansion oder Komprimierung der insbesondere monolithischen flexiblen Struktur im Teilbereich des Sitzes eine entsprechende Abstützung und somit eine Anpassung an verschiedene Bedürfnisse ermöglichen. So kann die flexible Struktur, insbesondere deren Teilstruktur oder -bereich beispielsweise derart angesteuert und bewegt werden, dass der Sitz in einer Sitz- oder Komfortposition mehr Seitenhalt aufweist als in einer Liege- oder Bettposition. Alternativ kann die flexible Struktur die gesamte Fläche des Sitzes bilden. Die Expansions- oder Hebelelemente können unterhalb einer Polsterung, insbesondere einer Schaumpolsterung angeordnet sein und sich entsprechend unterhalb der Schaumpolsterung bei einer Expansion in Richtung der Schaumpolsterung bewegen, sich insbesondere zu einer Kurve oder Bogen und/oder linear, insbesondere in der Höhe, aufstellen oder aufspannen, und gegen die Schaumpolsterung drücken, so dass eine entsprechende Abstützung ermöglicht ist. Alternativ kann die Reihe von Expansions- oder Hebelelementen in die Schaumpolsterung integriert, insbesondere in dieser direkt angeordnet sein, und sich bei einer Expansion in Richtung einer Oberfläche der Schaumpolsterung bewegen, insbesondere zu einer Kurve oder einem Bogen und/oder linear, insbesondere in der Höhe, aufstellen oder aufspannen.

In einer möglichen Ausführungsform ist beispielsweise mindestens eine Reihe von Expansions- oder Hebelelementen in Längsausdehnung des Sitzes im Bereich einer Seitenwange oder einer Lendenabstützung angeordnet, die der anliegenden Polsterung relativ zur Sitzbewegung, wie einer Lehnen- oder Sitzteilbewegung, eine hinreichende Abstützung und somit einen verbesserten Komfort für den Nutzer des Sitzes ermöglicht.

Beispielsweise kann die mindestens eine Reihe von Expansions- oder Hebelelementen in einer Liege- oder Bettposition des Sitzes entspannen. Insbesondere sind die Hebelelemente derart eingerichtet, dass diese im komprimierten Zustand, insbesondere im abgeklappten oder zusammengefalteten Zustand, in Expansionsrichtung, beispielsweise in Z-Richtung, federn. In einer Sitz- oder Start-und Landeposition des Sitzes sind die Expansions- oder Hebelelemente expandiert, insbesondere gespannt, aufgestellt, aufgeklappt oder aufgefaltet, und erhöhen eine Abstützung zum Beispiel in einer Seitenwange und somit den Seitenhalt und den Komfort für den Nutzer.

In einer möglichen Ausführungsform erfolgt die Expansion der Expansions- oder Hebelelemente durch einen Längenausgleich in der Verstellung der Lehne zum Sitzteil. Optional kann ein Elektromotor vorgesehen sein. Die Größe, Form und Gestaltung der Expansions- oder Hebelelemente und deren Expansionsfaktor ist beliebig skalierbar.

Die Expansions- oder Hebelelemente können in mehreren Reihen über- und/oder nebeneinander oder auf eine Fläche verteilt eine dreidimensionale Kunststoffstruktur unterhalb oder in der Polsterung bilden.

Wird das Strukturbauteil mit der inneren und zuvor beschriebenen flexiblen Struktur für einen Sitz, insbesondere einen Fahrzeug- oder Flugzeugsitz verwendet, wobei der komplette Sitz aus einer monolithischen flexiblen Struktur mit Strukturbereichen für eine Rückenlehne, ein Sitzteil und eine Fußabstützung gebildet ist, so kann die Expansion oder Komprimierung der monolithischen flexiblen Struktur und somit einer Verstellung des Sitzes in eine gewünschte Position durch eine Bewegung der Fußabstützung zum Sitzteil und/oder der Rückenlehne zur Sitzfläche gesteuert werden. Bewegt sich beispielsweise die Fußabstützung (auch Fußablage oder Fußverlängerung genannt) zum Sitzteil (auch Sitzkissen oder Sitzfläche genannt) in eine Komfort- oder Designposition, (zum Beispiel in eine Position der Fußabstützung zum Sitzkissen von 90 Grad) expandiert die Kompensationsstruktur. Umgekehrt ist die flexible Struktur in Liegeposition, in welcher die Fußabstützung zum Sitzteil in einer Ebene oder in einem Winkel von 0° angeordnet ist, komprimiert.

In einer weiteren Ausführungsform kann/können das jeweilige Längselement, insbesondere das Mittel- oder Steuerteil, aber auch die äußeren Längselemente oder Rautenaußenflächen, unterteilt sein, um einen Schwenk- oder Knickpunkt für das Strukturbauteil zu bilden. Mit anderen Worten: Die Längselemente - sowohl die Mittel-/Steuerteile als auch die äußeren Längselemente/Rautenaußenflächen - bilden Längshebel. In dem Bereich des Schwenk- oder Knickpunktes weist das jeweilige Längselement ein Gelenk, insbesondere ein Festkörpergelenk, auf. Das Gelenk weist zum Beispiel eine einseitige Verjüngung oder Einkerbung auf, um eine Drehachse, die senkrecht zur Längsausdehnung des jeweiligen Längselements verläuft, zu bilden. Alternativ kann das Gelenk auch eine zweiseitige Verjüngung oder Einkerbung aufweisen.

Beispielsweise sind die Längselemente bei einem Strukturbauteil für einen Sitz im Übergangsbereich zwischen Rückenlehne und Sitzteil oder zwischen Sitzteil und Fußabstützung unterteilt und mit einem Gelenk, zum Beispiel einem Festkörpergelenk versehen.

Wenn man die Längshebel der Rauten im Schwenk- oder Knickpunkt jeweils gegeneinander anordnet, kann der Weg, den die Drehachse oder der Drehachse vorgibt, die flexible Struktur expandieren lassen. Der linear expandierende Teil, insbesondere die äußeren Längselemente oder Rautenaußenflächen des Gitters, hat seinen Schwenk- oder Knickpunkt näher an der eigentlichen Drehachse oder am eigentlichen Drehpunkt der flexiblen Struktur. Der antreibende Mittelteil oder das Steuerteil hat seinen Schwenk- oder Knickpunkt weiter von der Drehachse oder vom Drehpunkt entfernt. Das hat zur Folge, dass die Expansion der Gitter-Struktur mit der Bewegung der Fußabstützung zum Sitzteil interagiert.

In einer möglichen Ausführungsform ist das kinetische Strukturbauteil aus Kunststoff hergestellt, insbesondere durch Spritzgießen, Prägen oder im 3D-Druckverfahren hergestellt. Hierdurch können Gelenke mit sehr dünnen Stegen hergestellt werden. Die Ausbildung der flexiblen Struktur mit serieller Gelenkkinematik aus Kunststoff ermöglicht eine Dauerbiegewechselfestigkeit und eine hohe Zug-/Druckfestigkeit.

Insbesondere kann die flexible Struktur und/oder deren Teilbereiche in Form einer flexiblen 3D-Kunststoffstruktur im Spritzgussverfahren oder im 3D-Druckverfahren hergestellt werden. Auch ist es möglich, das gesamte kinetische Strukturbauteil mit den äußeren Flächenelementen und der zwischen diesen vorgesehenen flexiblen Struktur im Spritzgussverfahren oder im 3D-Druckverfahren herzustellen.

Die Flächenelemente des Strukturbauteils sind insbesondere schalen- oder kissenförmig, zum Beispiel plattenförmig, ausgebildet. Die äußeren Flächenelemente können eine planare Form aufweisen. Alternativ können diese ergonomisch geformt und flächig ausgebildet sein.

Die mit der Erfindung erzielten Vorteile bestehen insbesondere darin, dass die flexible Struktur und damit das Strukturbauteil während der Expansion oder der Komprimierung stabil, insbesondere torsionsfest, sind. Darüber hinaus erfolgt eine synchrone Expansion oder Komprimierung der seriell angeordneten Expansions- oder Hebelelemente über die gesamte Ausdehnung des Strukturbauteils und/oder von Teilbereichen, wodurch eine variable, flächenbezogen unterschiedliche Abstützung des Nutzers des Sitzes ermöglicht ist. Dabei ist die Expansions- oder Komprimierungsbewegung der flexiblen Struktur und/oder der Teilbereiche steuerbar und skalierbar.

Die flexible reihenförmige 3D-Ausgestaltung der flexiblen Struktur oder Teilbereiche dieser ermöglicht komplexe Strukturen, die einfach kontrolliert und angetrieben zu einer Kurve oder einen Bogen expandieren.

Darüber hinaus ermöglicht die flexible Struktur aufgrund der unterschiedlichen flexiblen Ausgestaltung und Form, dass Bereiche der flexiblen Struktur in unterschiedliche Richtungen expandieren oder komprimieren.

Bei einem einen Sitz mit Fußabstützung, Sitzteil und Rückenlehne bildenden Strukturbauteil können die Fußabstützung, das Sitzteil und die Rückenlehne und/oder Teilbereiche dieser, wie Seitenwangenbereiche, Lordosebereich, in Form und/oder Ausmaß an verschiedenen Stellen mit der Bewegung der flexiblen Struktur verändert werden. Optional kann ein separater Antrieb vorgesehen sein, um die Expansion oder Komprimierung der flexiblen Struktur entsprechend zu steuern.

Ausführungsbeispiele der Erfindung werden anhand von Zeichnungen näher erläutert. Dabei zeigen:
Figuren 1A bis 1C schematisch in perspektivischer Darstellung eine Ausführungsform für ein Strukturbauteil mit einer Abdeckung als Sitz in verschiedenen Positionen,
Figuren 2A und 2B schematisch in Schnittdarstellung eine Ausführungsform mit einem Strukturbauteil mit einer flexiblen Struktur als eine Reihe von mäanderförmig angeordneten Expansionselementen im expandierten Zustand,
Figur 3 schematisch in Schnittdarstellung eine Ausführungsform mit einem Strukturbauteil mit einer flexiblen Struktur als eine Reihe von parallel zueinander angeordneten Expansionselementen im expandierten Zustand,
Figur 4 schematisch in Schnittdarstellung eine Ausführungsform mit einem Strukturbauteil mit einer flexiblen Struktur als eine Reihe von Z-förmig angeordneten Expansionselementen,
Figur 5 schematisch in Schnittdarstellung eine Ausführungsform für ein Strukturbauteil mit einer flexiblen Struktur als eine einzige Reihe von Expansionselementen,
Figuren 6 und 7 schematisch in Schnittdarstellung eine Ausführungsform für ein Strukturbauteil mit einer flexiblen Struktur als eine Doppelreihe von Expansionselementen,
Figuren 8 bis 10 schematisch in perspektivischer Darstellung eine Ausführungsform für eine flexible Struktur für ein Strukturbauteil im Bereiche eines Schwenk- oder Knickpunktes zwischen zwei Strukturbereichen, welche relativ zueinander schwenkbar sind,
Figur 11 schematisch in perspektivischer Darstellung eine Ausführungsform für eine flexible Struktur im komprimierten Zustand,
Figur 12 schematisch in perspektivischer Darstellung eine nicht erfindungsgemäße Ausführungsform für eine flexible Struktur im komprimierten Zustand,
Figuren 13A bis 13E schematisch eine Abfolge von perspektivischen Darstellungen der flexiblen Struktur während einer Expansionsbewegung,
Figuren 14A und 14B schematisch in Schnittdarstellung eine Ausführungsform für eine Polsterung mit unterteilten Schichten im Knickpunktbereich,
Figuren 15A bis 15C schematisch in Seitenansicht das Strukturbauteil mit Polsterung im Knickpunktbereich und in verschiedenen Positionen,
Figuren 16A bis 16C schematisch in Schnittdarstellung eine Ausführungsform für eine Polsterung mit keilförmiger Aussparung und Hebelstruktur im Knickpunktbereich,
Figuren 17A und 17B schematisch in Seitenansicht eine Ausführungsform für eine Polsterung mit keilförmiger Aussparung in Form einer einseitigen Einkerbung und einer rechteckförmigen Hebelstruktur im Knickpunktbereich,
Figuren 18A bis 18E schematisch in Seitenansicht eine Ausführungsform für eine Polsterung mit einer inneren keilförmigen Aussparung und einer dreiecksförmigen Hebelstruktur im Knickpunktbereich,
Figur 19 schematisch in Seitenansicht eine Ausführungsform für eine Polsterung mit keilförmiger Aussparung und einer Hebelstruktur im Knickpunktbereich sowie einem Bezugselement auf der Polsterung, und
Figuren 20 bis 23 schematisch in verschiedenen Ansichten und Positionen ein weiteres Ausführungsbeispiel für eine flexible Struktur eines Strukturbauteils.

Einander entsprechende Teile sind in allen Figuren mit den gleichen Bezugszeichen versehen.

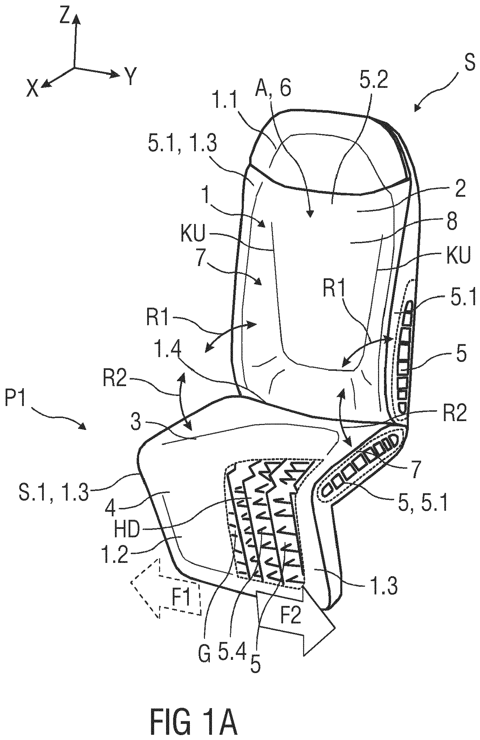

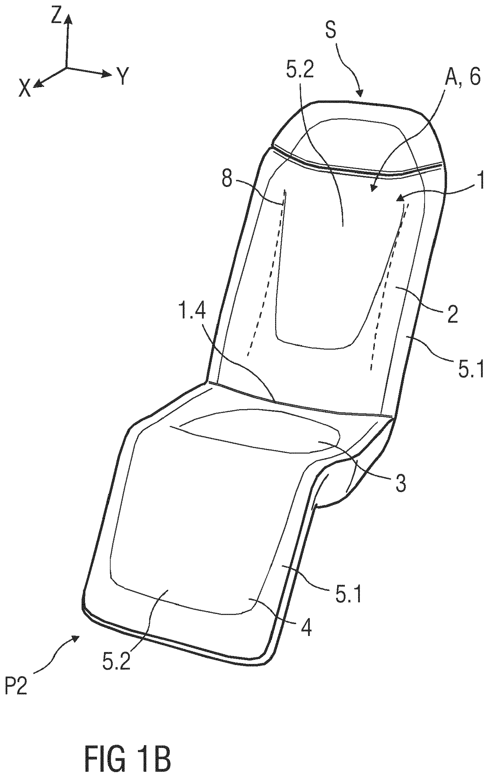

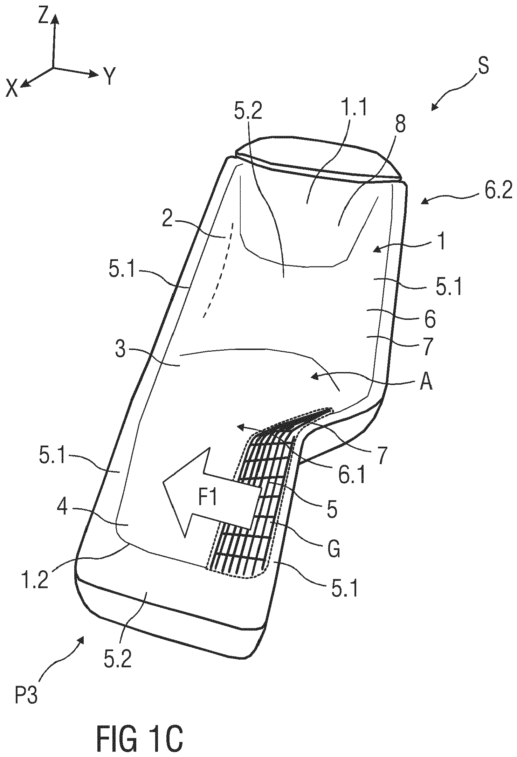

**Figuren 1A bis 1C** zeigen schematisch in perspektivischer Darstellung eine Ausführungsform für ein Strukturbauteil 1 als Sitz S in verschiedenen Positionen P1 bis P3. Der Sitz S umfasst zumindest eine Rückenlehne 2, ein Sitzteil 3 und eine Fußabstützung 4.

Position P1 zeigt den Sitz S beispielsweise in einer Sitzstellung mit einer weitgehend senkrechten Lehnenstellung, zum Beispiel in einer sogenannten TTL-Position. Position P2 zeigt den Sitz S beispielsweise in einer Komfortsitzstellung mit einer nach hinten geneigten Rückenlehne 2 und einer nach oben geneigten Fußabstützung 4. Position P3 zeigt den Sitz S beispielsweise in einer Liege- oder Bettstellung mit einer weitgehend vollständig nach hinten geneigten Rückenlehne 2 und einer weitgehend vollständig nach oben geneigten Fußabstützung 4.

Das Strukturbauteil 1 ist beispielsweise als ein kinetisches Strukturbauteil 1 mit verschiedenen Strukturbereichen 1.1, 1.2 ausgebildet. Das Strukturbauteil 1 umfasst eine flexible Struktur 5 mit mindestens einem Freiheitsgrad F1, F2, insbesondere mindestens einem translatorischen Freiheitsgrad F1, F2, und/oder mindestens einem Rotationsfreiheitsgrad R1, R2.

Die flexible Struktur 5 ist dabei eingerichtet, bogen- oder kurvenförmig zum Beispiel in Richtung des Freiheitsgrades F1 und/oder F2 und des Rotationsfreiheitsgrades R1 und/oder R2 zu komprimieren bzw. zu expandieren. Alternativ oder zusätzlich ist die flexible Struktur 5 eingerichtet, linear zum Beispiel in Richtung des translatorischen Freiheitsgrads F1 oder F2 zu komprimieren bzw. zu expandieren.

Bei dem in **Figuren 1A bis 1C** dargestellten Sitz S erstreckt sich die flexible Struktur 5 über eine gesamte Sitzlänge und bildet eine durchgehende Fläche von der Rückenlehne 2 über das Sitzteil 3 bis zur Fußabstützung 4. Alternativ kann die flexible Struktur 5 sich auch nur über die jeweilige Sitzkomponente - der Rückenlehne 2 oder dem Sitzteil 3 - erstrecken, so dass zwei separate flexible Strukturen 5 für einen Sitz S vorgesehen sind.

Die flexible Struktur 5 ist dabei zumindest bereichsweise eingerichtet, zu einem Bogen oder einer Kurve KU zu expandieren. Beispielsweise umfasst die flexible Struktur 5 mindestens eine Teilstruktur 5.1, die sich zum Beispiel entlang mindestens einer der beiden Seitenwangen 1.3 der Rückenlehne 2, des Sitzteils 3 und/oder der Fußabstützung 4 erstreckt und die eingerichtet ist, zu einer Kurve KU zu expandieren. An die jeweilige Teilstruktur 5.1 angrenzende flexible Teilstrukturen 5.2 sind eingerichtet, linear zu expandieren. Dabei expandiert/en die Teilstruktur/en 5.1 zu einer solchen Kurve KU, die im expandierten Zustand zumindest bereichsweise höher liegt als die linear expandierte/n angrenzende/n Teilstruktur/en 5.2. Hierdurch ist eine seitliche Abstützung für den Nutzer des Sitzes S in einfacher Art und Weise ermöglicht.

Die flexible Struktur 5 ist ein flexibles Strukturelement, das eine Abstützung für eine Polsterung 7 bildet. Beispielsweise ist die flexible Struktur 5 als ein monolithisches flexibles Strukturelement ausgebildet und unterhalb der Polsterung 7 angeordnet.

In einer möglichen Ausführungsform ist das kinetische Strukturbauteil 1, insbesondere die flexible Struktur 5 und deren Teilstrukturen 5.1, 5.2 aus Kunststoff hergestellt, insbesondere durch Spritzgießen, Prägen oder im 3D-Druckverfahren hergestellt. Hierdurch können Gelenke mit sehr dünnen Stegen hergestellt werden. Die Ausbildung der flexiblen Struktur 5 mit paralleler und/oder serieller Gelenkkinematik aus Kunststoff ermöglicht eine Dauerbiegewechselfestigkeit und eine hohe Zug-/Druckfestigkeit.

Insbesondere kann die flexible Struktur 5 zumindest in dem oder den Teilstrukturen 5.2 in Form eines flexiblen Gitters G, insbesondere eines Kunststoffgitters, ausgebildet sein und im Spritzgussverfahren oder im 3D-Druckverfahren hergestellt werden.

Beispielsweise kann die flexible Teilstruktur 5.2 sich über den gesamten mittleren Bereich des Sitzes S erstrecken, wobei sich die angrenzenden flexiblen Teilstrukturen 5.1 im Bereich von Seitenwangen 1.3 oder einer Lendenabstützung 1.4 des Sitzes S erstrecken.

Darüber hinaus kann die flexible Struktur 5, insbesondere die jeweilige Teilstruktur 5.1, 5.2, an einer zugehörigen Tragstruktur T, insbesondere eine rahmen- oder platten- oder schalenförmige Tragstruktur T angeordnet und befestigt sein.

Die Abdeckung A ist als ein Flächenelement 6 ausgebildet, dass die flexible Struktur 5 nach außen abdeckt oder umgibt. Die Abdeckung A umfasst als ein Unterteil die Polsterung 7 und als ein Oberteil ein Bezugselement 8, das die Polsterung 7 zumindest auf der Oberflächenseite abdeckt, die als Sitz-/Liegefläche dient. Die Polsterung 7 ist insbesondere eine Schaumpolsterung und kann beispielsweise als ein flächiges Schaumkissen oder eine Schaumschale ausgebildet sein. Alternativ kann die Abdeckung A auch nur aus einem gepolsterten Bezugselement 8 gebildet sein.

Die Abdeckung A kann als äußeres Flächenelement 6, die flexible Struktur 5 ober- und unterseitig abdecken oder umgeben. Dabei weist die Oberseite der Abdeckung A ein erstes flexibles, insbesondere gepolstertes Flächenelement 6.1 auf. Die Unterseite der Abdeckung A weist ein zweites flexibles, beispielsweise plattenförmiges oder schalenförmiges, Flächenelement 6.2 auf.

Die flexible/n Teilstruktur/en 5.1 ist bzw. sind eingerichtet, in diese einwirkende Kräfte, wie zum Beispiel gesteuerte Druck- oder Schubkräfte, aufzunehmen und gegebenenfalls weiterzuleiten, um Volumen, Form, Abmaße, insbesondere Höhe, und/oder Position der flexible Teilstruktur/en 5.1 während der Expansion oder Komprimierung zu ändern, insbesondere kurven- oder bogenförmig und/oder linear zu bewegen. Insbesondere wird oder werden die flexible/n Teilstruktur/en 5.1, während der Expansion zu der Kurve KU aufgestellt oder aufzufalten oder während der Komprimierung zusammenzuklappen oder zusammenzufalten.

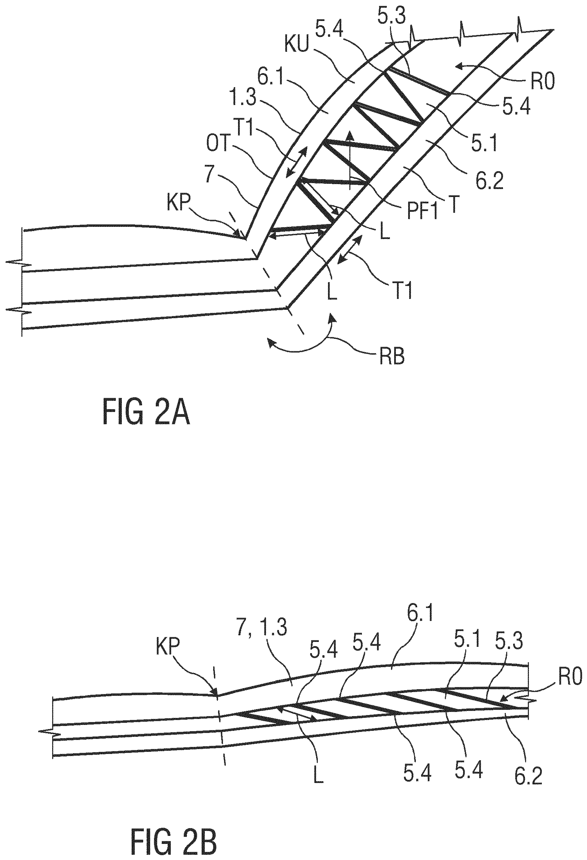

Darüber hinaus kann das kinetische Strukturbauteil 1 als Monolith aus den äußeren flexiblen Flächenelementen 6.1, 6.2 und der inneren flexiblen Struktur 5 mit den flexiblen Teilstrukturen 5.1 mit Reihen R0 von Expansionselementen 5.3 mit horizontaler Drehachse HD (**Figuren 2 bis 7**) und den flexiblen Teilstrukturen 5.2 mit dem flexiblen Gitter G mit Hebelgelenken mit horizontaler Drehachse HD und vertikaler Drehachse VD **(****Figuren 1A bis 1C****)** gebildet sein.

**Figuren 2A, 2B** zeigen schematisch in Schnittdarstellung eine Ausführungsform einer flexiblen Teilstruktur 5.1 mit einer Reihe R0 von Expansionselementen 5.3.

**Figur 2A** zeigt schematisch in Schnittdarstellung die flexible Teilstruktur 5.1 beispielsweise für eine Seitenwange 1.3. Die seriell in der Reihe R0 angeordneten Expansionselemente 5.3 sind aufgestellt oder aufgespannt im expandierten Zustand und bilden die Kurve KU. In einer der Sitzpositionen P1 oder P2 des Sitzes S sind die Expansionselemente 5.3 weitgehend vollständig aufgestellt oder aufgespannt und bilden eine sichere seitliche Abstützung.

**Figur 2B** zeigt schematisch in Schnittdarstellung die flexible Teilstruktur 5.1 im teilweise komprimierten Zustand, in welchem die Expansionselemente 5.3 zusammengefaltet oder abgeklappt sind. In der Liegeposition P3 des Sitzes S sind die Expansionselemente 5.3 teilweise zusammengefaltet oder abgeklappt oder schräg gestellt.

Die Expansionselemente 5.3 sind mäanderförmig zwischen dem oberen, flexiblen, insbesondere gepolsterten Flächenelement 6.1 und dem unteren flexiblen Flächenelement 6.2 angeordnet.

Dabei kann die flexible Teilstruktur 5.2 aus einem immer wiederkehrenden identischen mechanischen Expansionselement 5.3, insbesondere einem Hebelelement, gebildet sein, die zu einer Reihe R0 verbunden sind. Dabei können die Expansionselemente 5.3 unterschiedliche Längen L aufweisen, so dass die in einer Reihe R0 angeordneten Expansionselemente 5.3 im expandierten Zustand bogen- oder kurvenförmig aufspannen und eine bogen- oder kurvenförmige Oberfläche OF bilden.

Das eine Ende des jeweiligen Expansionselements 5.3, insbesondere eines steg- oder plattenförmigen Hebels, ist mit dem äußeren und gepolsterten flexiblen Flächenelement 6.1 verbunden, insbesondere an diesem mittels eines Gelenks 5.4, insbesondere eines Festkörpergelenks, angelenkt. Das gegenüberliegende Ende des jeweiligen Expansionselements 5.3 ist mit dem anderen äußeren flexiblen Flächenelement 6.2 verbunden, insbesondere an diesem mittels eines weiteren Gelenks 5.4, insbesondere eines Festkörpergelenks, angelenkt.

Steuert man die Bewegung der Expansionselemente 5.3 beispielsweise synchron gemäß Pfeil PF1 an, expandiert die gesamte Reihe R0 und somit die flexible Teilstruktur 5.1 zu der Kurve KU.

Dabei kann die Ansteuerung der Expansionselemente 5.3 durch eine lineare Bewegung T1 oder rotatorische Bewegung RB der Rückenlehne 2 oder einer anderen Komponente des Sitzes S zwangsweise erfolgen. Bei der rotatorischen Bewegung RB der Rückenlehne 2 relativ zum Sitzteil 3 bewegen sich entsprechende Polsterungsbereiche der Polsterung 7 im Bereich eine Knickpunktes KP relativ zueinander.

Die Reihe R0 der Expansionselemente 5.3 kann beliebig skaliert werden, so dass es möglich ist, die Expansion oder Komprimierung und die Stabilität dem gewünschten Einsatz oder der gewünschten Anwendung des Strukturbauteils 1 anzupassen.

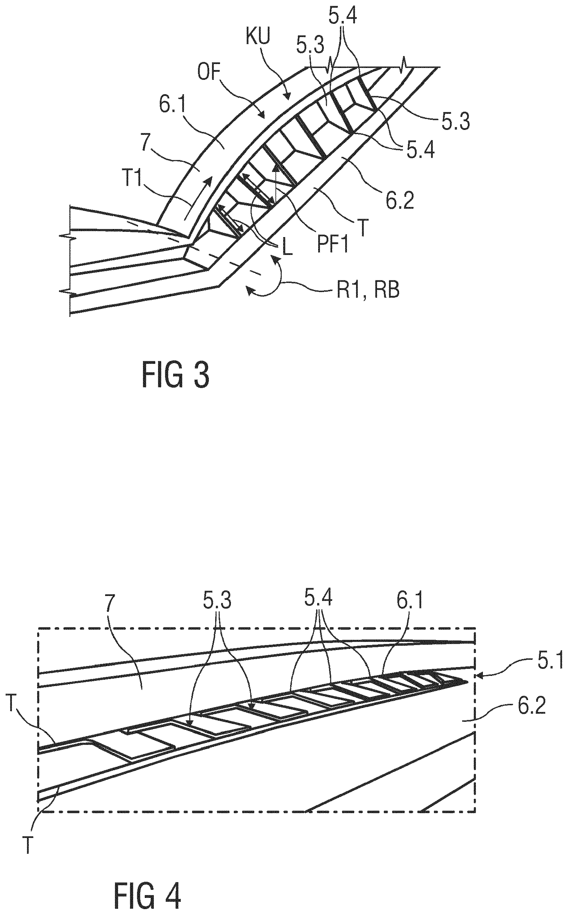

**Figur 3** zeigt schematisch in Schnittdarstellung eine alternative Ausführungsform für Expansionselemente 5.3, welche in Reihe R0 und im expandierten Zustand parallel zueinander angeordnet sind.

**Figur 4** zeigt schematisch in Schnittdarstellung eine Ausführungsform einer flexiblen Teilstruktur 5.1 mit einer Reihe R0 von Z-förmig ausgestalteten Expansionselementen 5.3. Alternativ können die Expansionselemente 5.3 L-förmig ausgebildet sein. Die Expansionselemente 5.3 sind zwischen zwei flexiblen Flächenelementen 6.1, 6.2, wobei das obere flexible Flächenelement 6.1 mit der Polsterung 7 versehen ist.

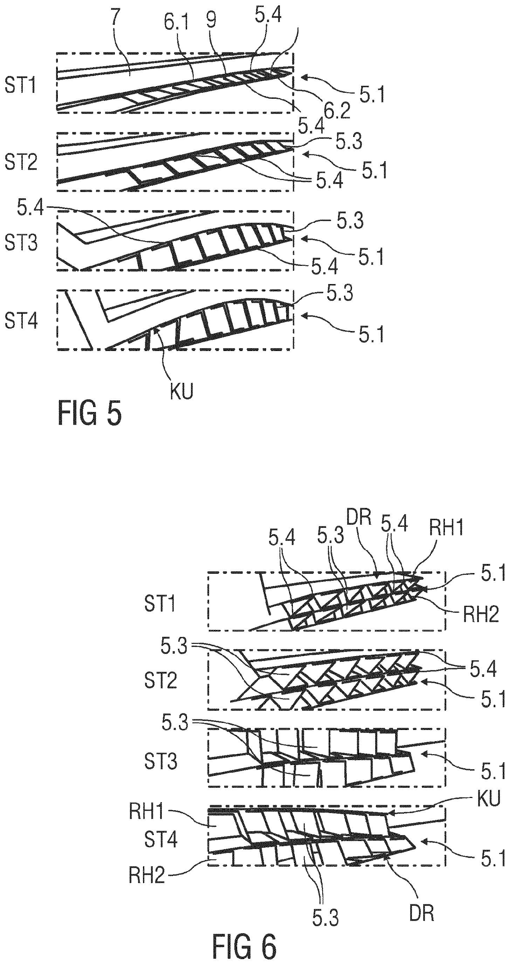

**Figur 5** zeigt schematisch in Schnittdarstellung die flexible Teilstruktur 5.1 nach **Figur 4** in verschiedenen Expansionsstufen ST1 bis ST4 von oben in einer weitgehend komprimierten Position nach unten in einer vollständig expandierten Position, in welcher die Expansionselemente 5.3 zu der Kurve KU expandiert sind.

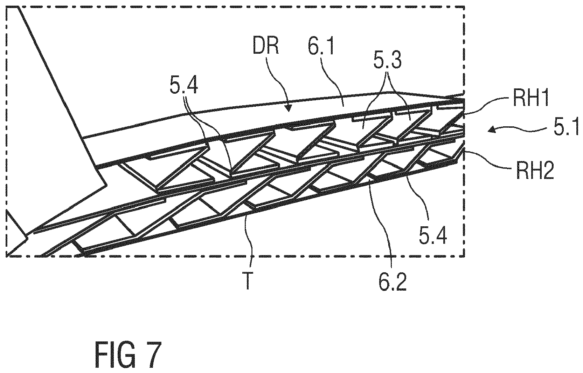

**Figuren 6** **und** **7** zeigen schematisch in Schnittdarstellung eine Ausführungsform für eine flexible Teilstruktur 5.1 mit einer Doppelreihe DR von Expansionselementen 5.3 ohne Polsterung 7.

Dabei zeigt die **Figur 6** die flexible Teilstruktur 5.1 der **Figur 7** in verschiedenen Expansionsstufen ST1 bis ST4 von oben in einer weitgehend komprimierten Position nach unten in einer vollständig expandierten Position, in welcher die Expansionselemente 5.3 zu der Kurve KU expandiert sind.

Dabei ist die Doppelreihe DR von Expansionselementen 5.3 aus übereinander angeordneten einzelnen Reihen RH1, RH2 von Expansionselementen 5.3 gebildet.

Mit anderen Worten: Die Expansionselemente 5.3, wie zum Beispiel Hebelelemente, können in mehreren Reihen RH1, RH2 über- und/oder nebeneinander oder auf eine Fläche verteilt eine dreidimensionale Kunststoffstruktur unterhalb oder in der Polsterung 7 bilden.

Die Expansionselemente 5.3 aller zuvor beschriebenen Ausführungsbeispiele sind darüber hinaus federelastisch ausgebildet. Insbesondere ist das immer wiederkehrende Expansionselement 5.3 derart zwischen den äußeren flexiblen Flächenelementen 6.1, 6.2 angeordnet, dass es in Abhängigkeit von einer einwirkenden und gesteuerten Kraft seine Form verändert und sich bewegt, insbesondere expandiert, insbesondere zu der Kurve KU aufspannt oder auffaltet. Dabei bilden die wiederkehrenden Expansionselemente 5.3 einer Reihe R0 eine serielle Kinematik, wodurch das Strukturbauteil 1 oder die Teilbereiche dieses, wie die Seitenwangen 1.3 und/oder die Lendenabstützung 1.4, über deren Länge bogen- oder kurvenförmig expandiert/en oder komprimiert/en, indem die Expansionselemente 5.3 der Reihe/n R0 synchron expandieren, insbesondere aufklappen, aufspannen, auffalten oder aufstellen, bzw. synchron komprimieren, insbesondere abklappen, entspannen, zusammenfalten oder zusammenklappen.

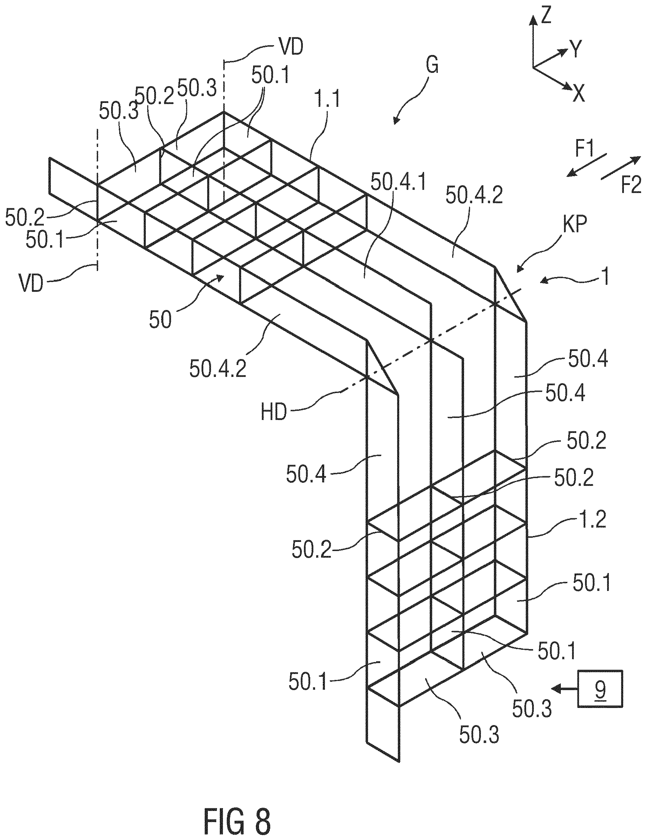

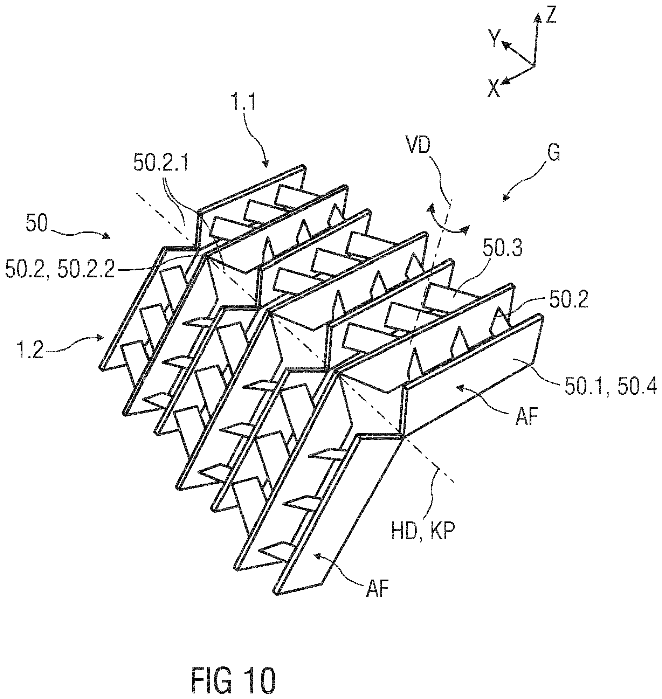

**Figuren 8 bis 10** zeigen schematisch in perspektivischer Darstellung eine Ausführungsform für eine flexible Struktur 50 für ein Strukturbauteil 1 mit einem Schwenk- oder Knickpunkt KP zwischen zwei Strukturbereichen 1.1 und 1.2, welche relativ zueinander um den Knickpunkt KP schwenkbar oder neigbar sind.

Die flexible Struktur 50 umfasst eine Mehrzahl von Gliedern 50.1, Gelenken 50.2 und/oder Hebelelementen 50.3, welche in Reihe R0 und/oder parallel miteinander verbunden sind, um in mindestens einem, insbesondere in mindestens zwei oder mehr Freiheitsgraden F1 und F2 zu komprimieren bzw. zu expandieren.

Insbesondere kann das kinetische Strukturbauteil 1 als Monolith aus der inneren flexiblen Struktur 50 gebildet sein. Die flexible Struktur 50 ist beispielsweise ein flexibles Gitter G mit Hebelelementen 50.3, die mittels Gelenken 50.2 mit horizontaler Drehachse HD im Bereich des Knickpunktes KP und mit vertikaler Drehachse VD im Bereich der Anlenkung der Hebelelemente 50.3 an den Längselementen 50.4 angelenkt sind.

Dabei kann die flexible Struktur 50 aus einem immer wiederkehrenden mechanischen Hebelelement 50.3 gebildet sein, wobei die Hebelelemente 50.3 zu einem Gitter G verbunden sind, das linear expandiert oder komprimiert.

Die Hebelelemente 50.3 sind beispielsweise rautenförmig angeordnet. Insbesondere ist das immer wiederkehrenden Hebelelement 50.3 derart zwischen Längselementen 50.4 angeordnet, dass das Gitter G entlang der Längselemente 50.4 zueinander gespiegelte Rauten R umfasst, welche in Abhängigkeit von einer einwirkenden und gesteuerten Kraft ihre Form verändern und sich bewegen, insbesondere linear expandieren oder linear komprimieren. Die jeweilige Raute R ist dabei durch parallele und voneinander beabstandete Längselemente 50.4 gebildet, welche durch die Hebelelemente 50.3, zum Beispiel planare Stege, miteinander verbunden sind, die an den Längselementen 50.4 angelenkt sind. Die wiederkehrenden Hebelelemente 50.3 zwischen den Längselementen 50.4 bilden eine parallele und serielle Kinematik, wodurch das Strukturbauteil 1 linear expandiert oder linear komprimiert.

Das eine Ende des jeweiligen Hebelelements 50.3 oder des jeweiligen Steges von zueinander gespiegelten Rauten R ist zur Mitte hin mit einem mittleren, steuerbaren Längselement 50.4.1 oder einem Mittelteil, insbesondere einem Steuerteil, verbunden. Das steuerbare Längselement 50.4.1 bildet die Spiegelachse der zueinander gespiegelten Rauten R.

Das gegenüberliegende Ende des jeweiligen Hebelelements 50.3 von zueinander gespiegelten Rauten R ist mit einem äußeren Längselement 50.4.2 oder einer Rautenaußenfläche verbunden, die wiederum mit dem nächsten Hebelelement 50.3 verbunden ist oder eine Außenfläche AF des Gitters G und damit die flexible Struktur 5 bildet.

Dabei sind die Enden des Hebelelements 50.3 am jeweiligen Längselement 50.4 angelenkt. Hierzu sind an jedem Ende des Hebelelements 50.3 Gelenke 50.2 vorgesehen. Diese Gelenke 50.2 sind beispielsweise Festkörpergelenke 50.2.2, die monolithisch mit den Längselementen 50.4, beispielsweise durch eine Verjüngung oder Einkerbung 50.2.1, gebildet sind. Mittels des Gelenks 50.2 sind die Hebelelemente 50.3 relativ zum jeweiligen Längselement 50.4 um eine vertikale Drehachse VD schwenk- oder drehbar.

Da die Rautenaußenflächen der Hebelelemente 50.3, d.h. die äußeren Längselemente 50.4.2 einer Raute R, linear expandieren, können mehrere Rauten R mit ihren äußeren Längselementen 50.4.2 zu einem expandierenden Gitter G verbunden werden. Dabei können die Rauten R in Längsausdehnung des Strukturbauteils 1, in Reihe und in Querausdehnung nebeneinander angeordnet sein.

Expandiert das Gitter G und damit die flexible Struktur 50, bewegen sich die steuerbaren Längselemente 50.4.1 und damit die jeweiligen Mittelteile der Rauten R 90° zur Expansion. Steuert man die Bewegung der Mittelteile an, expandiert oder komprimiert das gesamte Gitter G und somit die flexible Struktur 50.

Die Rauten R und damit das Gitter G können beliebig skaliert werden, so dass es möglich ist, die Expansion oder Komprimierung und die Stabilität dem gewünschten Einsatz oder der gewünschten Anwendung des Strukturbauteils 1 anzupassen. Die flexible Struktur 50 ist somit nicht nur als Teil eines Sitzes S, sondern auch für andere Bauteile, wie Verkleidungen, Armlehnen, verwendbar.

Wird das Strukturbauteil 1 mit der inneren und zuvor beschriebenen flexiblen Struktur 50 für einen Sitz S, insbesondere einen Fahrzeug- oder Flugzeugsitz verwendet, wobei der komplette Sitz S aus einer monolithischen flexiblen Struktur 50 mit Strukturbereichen 1.1, 1.2, beispielsweise für ein Sitzteil 3 und eine Fußabstützung 4 gebildet ist, so kann die Expansion oder Komprimierung der monolithischen flexiblen Struktur 50 und somit eine Verstellung des Sitzes S in eine gewünschte Position P1 bis P3 durch eine Bewegung der Fußabstützung 4 zum Sitzteil 3 (in Figuren 2 bis 4 dargestellt) und/oder der Rückenlehne 2 zum Sitzteil 3 gesteuert werden.

Bewegt sich beispielsweise die Fußabstützung 4 (auch Fußablage oder Fußverlängerung genannt) zum Sitzteil 3 (auch Sitzkissen oder Sitzfläche genannt) aus der Position P1, zum Beispiel eine Sitzposition mit einer Anordnung der Fußabstützung 4 zum Sitzteil 3 in einem Winkel von 90 Grad, ist die flexible Struktur 50 expandiert. Das heißt, die Rauten R sind vollständig expandiert und geöffnet, wie in **Figur 8** dargestellt.

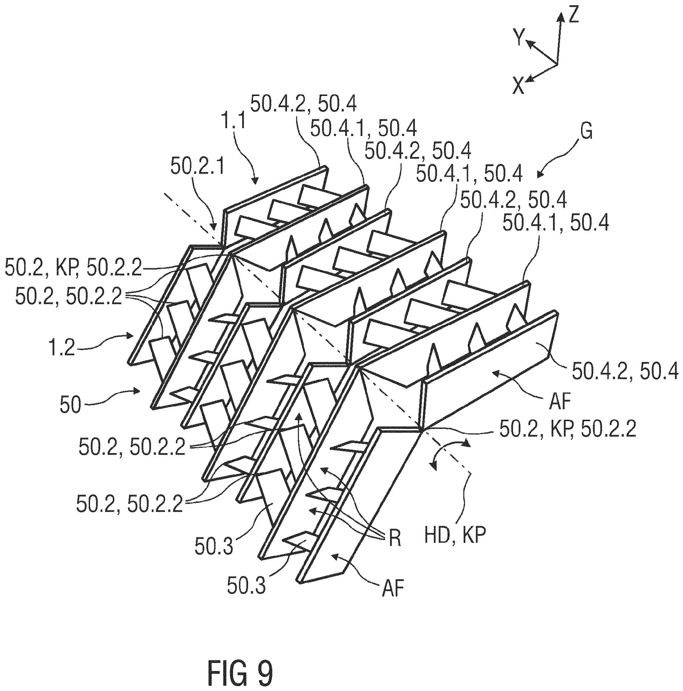

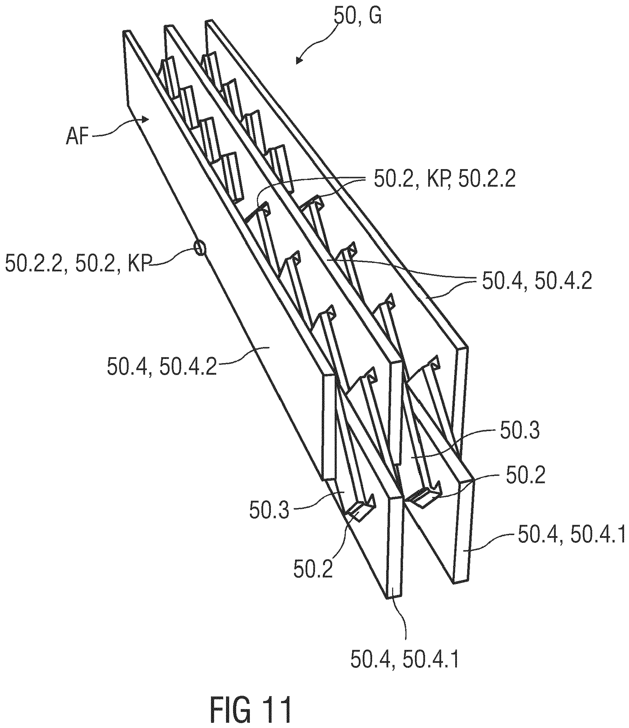

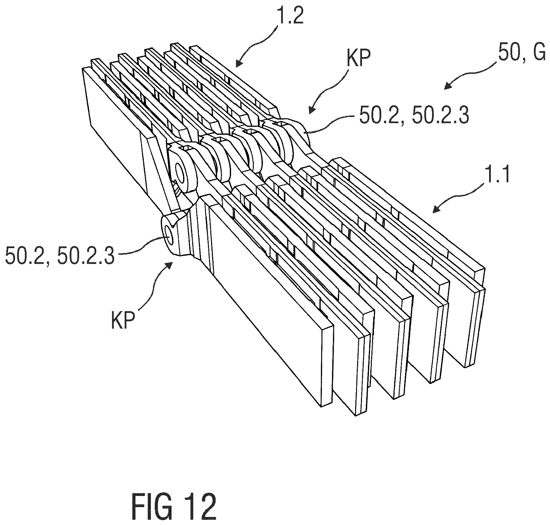

Umgekehrt ist die flexible Struktur 50 in die Position P2 oder P3, eine Komfortsitz- bzw. Liegeposition gestellt, in welcher die Fußabstützung 4 zum Sitzteil 3 in einem Winkel von 45° bzw. in einer Ebene oder in einem Winkel von 0° angeordnet ist, dann komprimiert die flexible Struktur 50. Das heißt, die Rauten R sind teilweise komprimiert und geschlossen, wie in **Figuren 9 bis 10** dargestellt. Die Rauten R sind vollständig geschlossen, wenn die flexible Struktur 50 eine durchgehende ebene Fläche bildet, wie dies in **Figuren 11** **und** **12** dargestellt ist.

Das jeweilige Längselement 50.4, insbesondere das steuerbare Längselement 50.4.1, aber auch die äußeren Längselemente 50.4.2 sind unterteilt, um den Knickpunkt KP für das Strukturbauteil 1 zu bilden. Mit anderen Worten: Die Längselemente 50.4 bilden Längshebel. In dem Bereich des Knickpunktes KP weist das jeweilige Längselement 50.4 ein Gelenk 50.2, insbesondere ein Festkörpergelenk, auf. Das Gelenk 50.2 weist zum Beispiel eine einseitige Verjüngung oder Einkerbung 50.2.1 auf, um im Knickpunkt KP eine horizontale Drehachse HD, die senkrecht zur Längsausdehnung des jeweiligen Längselements 50.4 verläuft, zu bilden.

Beispielsweise sind die Längselemente 50.4 bei dem Strukturbauteil 1 für den Sitz S im Übergangsbereich zwischen Rückenlehne 2 und Sitzteil 3 oder zwischen Sitzteil 3 und Fußabstützung 4 unterteilt und mit einem zugehörigen Gelenk 50.2, zum Beispiel einem Festkörpergelenk versehen.

Wenn man die Längshebel oder Längselemente 50.4 der Rauten R im Knickpunkt KP jeweils gegeneinander anordnet, kann der Weg den die horizontale Drehachse HD vorgibt, die flexible Struktur 50 expandieren oder komprimieren lassen. Der linear expandierende Teil, insbesondere die äußeren Längselemente 50.4.2 der Rauten R und des Gitters G, hat seinen Knickpunkt KP näher an der eigentlichen horizontalen Drehachse HD der flexible Struktur 50.

Das steuerbare Längselement 50.4.1 hat seinen Schwenk- oder Knickpunkt KP weiter von der horizontalen Drehachse HD entfernt. Das hat zur Folge, dass die Expansion der flexiblen Struktur 50 und damit des Gitters G mit der Bewegung der Fußabstützung 4 zum Sitzteil 3 interagiert.

Zur Steuerung des steuerbaren Längselements 50.4.1 kann ein separater Antrieb 9 vorgesehen sein, um die Bewegung des steuerbaren Längselements 50.4.1 und daraus resultierend die Expansion oder Komprimierung der flexible Struktur 50 entsprechend zu steuern.

**Figuren 11** **und** **12** zeigen schematisch in perspektivischer Darstellung die flexible Struktur 50 im komprimierten Zustand, in welcher die flexible Struktur 50 eine weitgehend durchgehende ebene Fläche bildet. Die Rauten R sind weitgehend geschlossen und die gelenkig gelagerten Hebelelemente 50.3 sind im Wesentlichen parallel zu den Längselementen 50.4 angeordnet.

In **Figur 11** sind die Gelenke 50.2 mit horizontaler Drehachse HD im Knickpunkt KP als Festkörpergelenke 50.2.2 mit Einkerbungen 50.2.1 ausgebildet. In **Figur 12** sind die Gelenke 50.2 am jeweiligen Knickpunkt KP als herkömmliche Drehgelenke 50.2.3 ausgebildet.

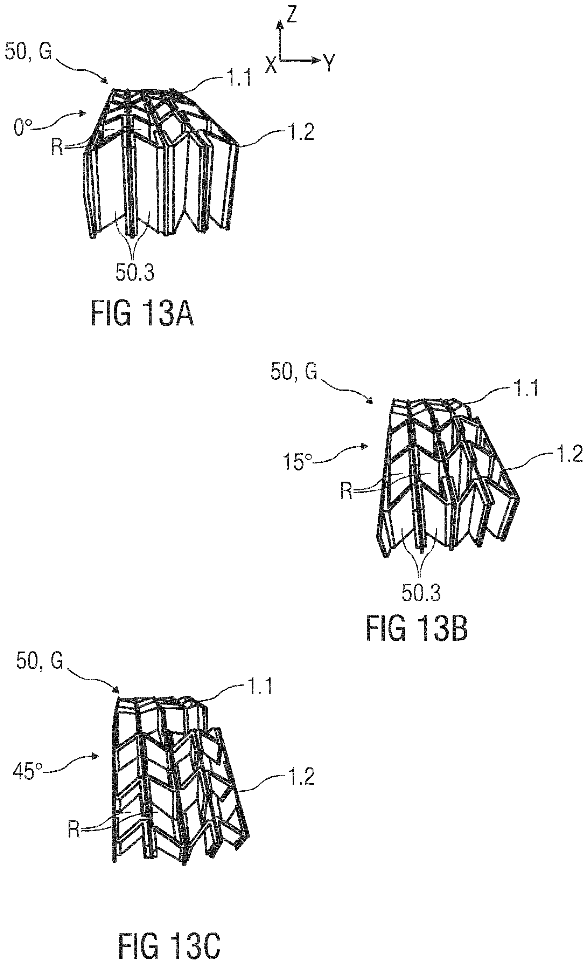

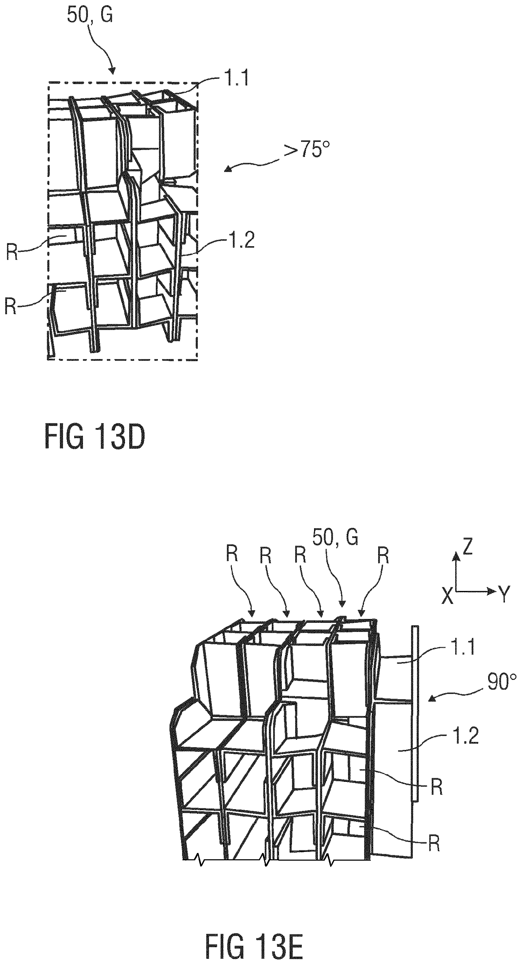

**Figuren 13A bis 13E** zeigen schematisch eine Abfolge von perspektivischen Darstellungen der flexible Struktur 50 während einer Expansionsbewegung aus einem vollständig komprimierten Zustand der Rauten R, in welchem die Strukturbereiche 1.1 und 1.2 eine im Wesentlichen ebene Fläche bilden, in einen vollständig expandierten Zustand der Rauten R, in welchem die Strukturbereiche 1.1 und 1.2 in einem Winkel von 90° zueinander angeordnet sind.

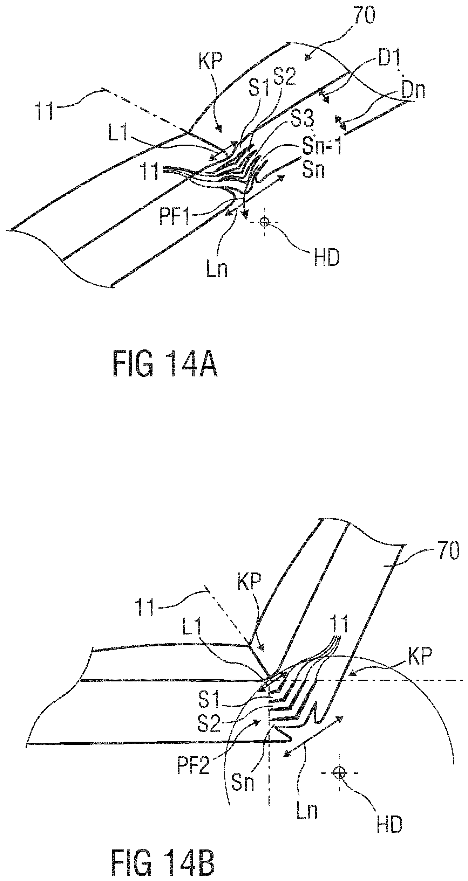

**Figuren 14A bis 14B** zeigen schematisch in Schnittdarstellung eine Ausführungsform für die Polsterung 70.

Die Polsterung 70 ist im Bereich eines Biege- oder Knickpunktes KP in mehrere Schichten S1 bis Sn unterteilt.

Die Schichten S1 bis Sn im Knickpunktbereich sind beispielsweise durch in die Polsterung 70 eingebrachte Durchgangsöffnungen 11 gebildet, die sich quer zur Längsausdehnung der Polsterung 70 durch diese hindurch und parallel zu einer Knicklinie 10 der Polsterung 70 erstrecken. Die Durchgangsöffnungen 11 sind schlitzförmig ausgebildet.

Durch die Durchgangsöffnungen 11 sind die Schichten S1 bis Sn im Bereich des Knickpunktes KP voneinander getrennt. Mit anderen Worten: Die Schichten S1 bis Sn sind im Bereich des Knickpunktes KP nicht miteinander verbunden. Dies ermöglicht in einfacher Art und Weise, dass die jeweilige Schicht S1 bis Sn beim Biegen oder Knicken der Polsterung 70 im Knickpunkt KP um ihre jeweilige Länge expandieren oder komprimieren kann. Die Komprimierung der jeweiligen Schicht S1 bis Sn erfolgt vom Knickpunkt KP weg, wie dies durch einen Pfeil PF 1 in **Figur 14A** dargestellt ist.

Die Expansion der jeweiligen Schicht S1 bis Sn erfolgt zum Knickpunkt KP hin gemäß Pfeil PF2, wie dies in **Figur 14B** dargestellt ist. Die Expansion und die Komprimierung haben dabei keinen Einfluss auf die Polsteroberfläche.

Darüber hinaus können sich die Schichten S1 bis Sn in ihrer Länge L1 bis Ln in Längsausdehnung der Polsterung 70 und damit quer zur Knicklinie 10 unterscheiden. Beispielsweise weist die vom Knickpunkt KP und damit von der Knicklinie 10 am weitesten entfernte Schicht Sn die größte Länge Ln in Längsausdehnung auf. Die Länge Ln-1 bis L1 jeder weiteren Schicht Sn-1 bis S1 verkürzt sich bis zum Knickpunkt KP. Dabei kann die Größe der jeweiligen Länge L1 bis Ln der Schichten S1 bis Sn zusätzlich von der Dicke D1 bis Dn der jeweiligen Schicht S1 bis Sn abhängen. Alternativ können alle Schichten S1 bis Sn gleich dick ausgebildet sein. In einer weiteren Ausführungsform weisen alle Schichten S1 bis Sn die gleiche Breite auf, die insbesondere identisch zur Breite der Polsterung 70 ist.

Die horizontale Drehachse HD der Polsterung 70 kann darüber hinaus auf die Oberfläche der Polsterung verlagert werden. Hierdurch kommt es weder zu Überpressungen oder Überdehnungen des Schaums der Polsterung 70 oder eines auf der Polsterung 70 angeordneten Bezugselements 8.

Eine solche Ausgestaltung der Polsterung 70 mit mehreren Schichten S1 bis Sn im Knickpunktbereich ermöglicht in einfacher Art und Weise, dass diese Schichten S1 bis Sn bei einer Biegung der Polsterung 70 ohne Einfluss auf die Oberfläche der Polsterung 70 expandieren können. Insbesondere bei einer Schaumpolsterung mit mehreren unterteilten Schichten S1 bis Sn im Knickpunktbereich wird der Schaum am Knickpunkt KP nicht gepresst oder gestaucht. Vielmehr werden die einzelnen Schichten S1 bis Sn bewegt oder verlagert, so dass die Polsteroberfläche und/oder das Bezugselement 8 nicht gewölbt oder gefaltet wird bzw. werden und der Komfort verbessert ist. Somit ist ein Biegen oder Knicken der Polsterung 70 unabhängig von der horizontalen Drehachse HD und ohne Stauchen oder Pressen möglich.

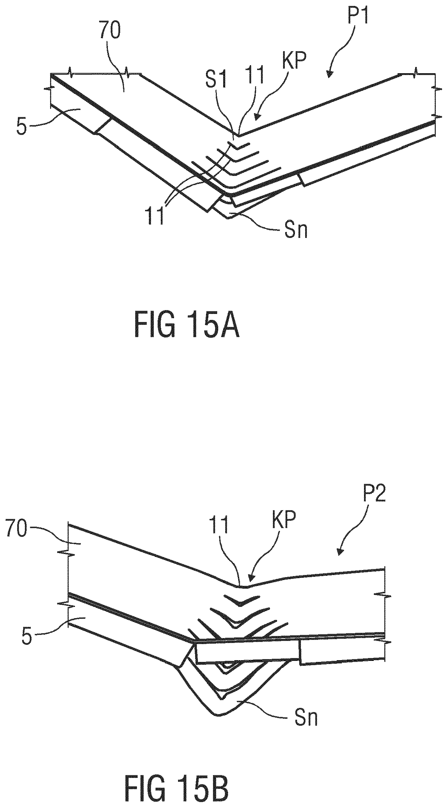

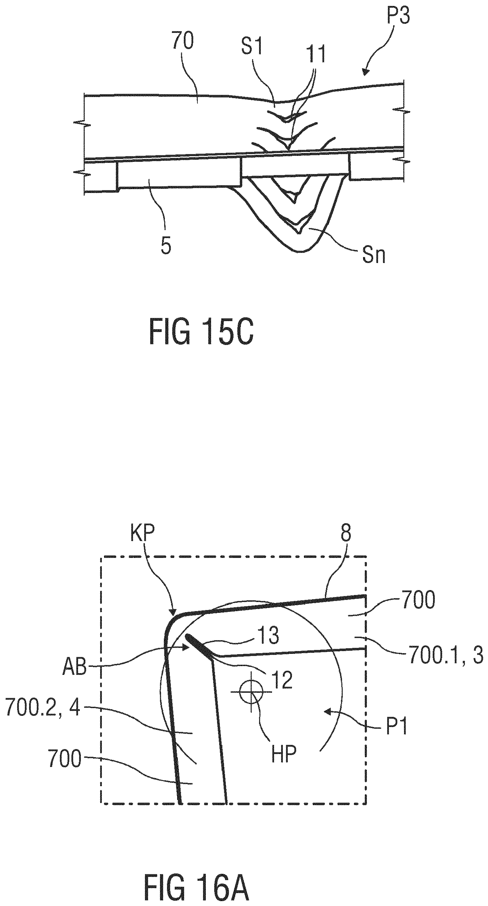

**Figuren 15A bis 15C** zeigen schematisch in Seitenansicht das Strukturbauteil 5 mit der Polsterung 700 in verschiedenen Positionen P1 bis P3. Die Polsterung 700 weist im Bereich des Knickpunktes KP die oben beschriebenen durch Durchgangsöffnungen 11 voneinander getrennten Schichten S1 bis Sn auf.

**Figuren 16A bis 16C** zeigen schematisch jeweils in Seitenansicht eine Ausführungsform für die Polsterung 700 in den verschiedenen Position P1 bis P3.

Die Polsterung 700 weist im Bereich eines Biege- oder Knickpunktes KP eine keilförmige Aussparung 13 auf, in welcher eine flexible Hebelstruktur 12 angeordnet ist.

**Figur 16A** zeigt die Polsterung 700 in der Position P1 einer Sitzposition des Sitzes S. Die flexible Hebelstruktur 12 ist komprimiert.

Die Polsterung 700 ist insbesondere einteilig ausgebildet und weist beispielsweise einen Polsterungsbereich 7.1 für das Sitzteil 3 und einen daran angrenzenden Polsterungsbereich 7.2 für die Fußabstützung 4 auf. Die beiden aneinander grenzenden Polsterungsbereiche 7.1 und 7.2 sind im angrenzenden Bereich AB um den Knickpunkt KP relativ zueinander bewegbar, insbesondere neigbar oder knickbar. Der Knickpunkt KP der Polsterung 700 liegt dabei insbesondere im Kniebereich eines Nutzers.

Dabei kommt es im Kniebereich und somit im angrenzenden Bereich AB zwischen den beiden Polsterungsbereichen 7.1 und 7.2 aufgrund der Dicke der Polsterung 700 zu einer starken Überdehnung der Polsterung 700, insbesondere des Schaumes der Polsterung 700, und des Bezugselements 8, wenn die aneinander angrenzenden Polsterungsbereiche 700.1 und 700.2 in einem Winkel α von beispielsweise circa 90° in der Position P1, eine Sitzposition des Sitzes S, zueinander angeordnet sind. Darüber hinaus kann es aufgrund der Schaumdicke zu einem zu großen Radius im Kniebereich kommen.

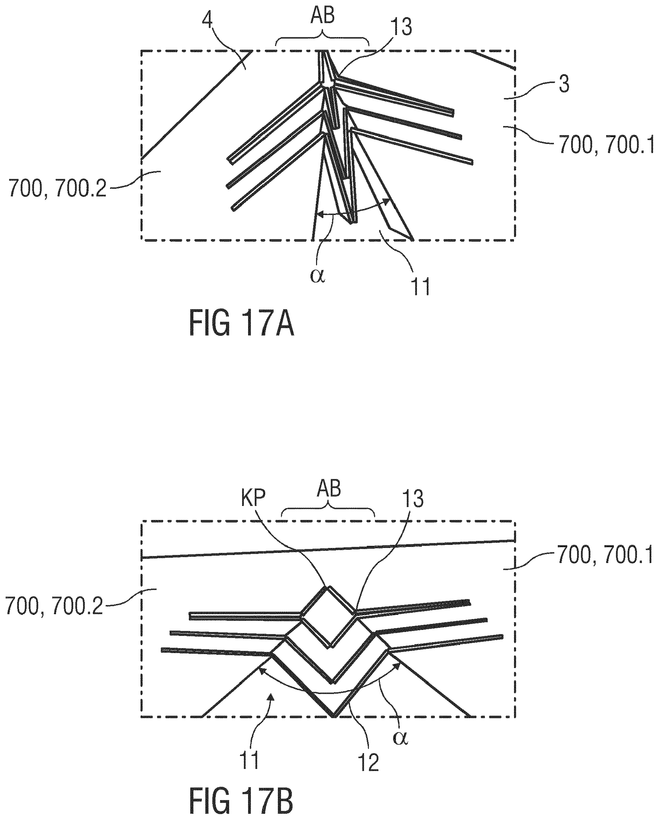

Um die Stabilität und Statik der Polsterung 700 im Knickpunktbereich zu erhalten, ist im Bereich der keilförmigen Aussparung 13 die Hebelstruktur 12, insbesondere ein Kunststoffhebel, zur Unterstützung der Relativbewegung der Polsterungsbereiche 700.1, 700.2 zueinander integriert, beispielsweise innenliegend oder aufliegend angeordnet. Die Figuren 16A bis 16C und 17A bis 17B zeigen eine aufliegende Anordnung der Hebelstruktur 12 in der einseitig offenen keilförmigen Aussparung 13 der Polsterung 700.

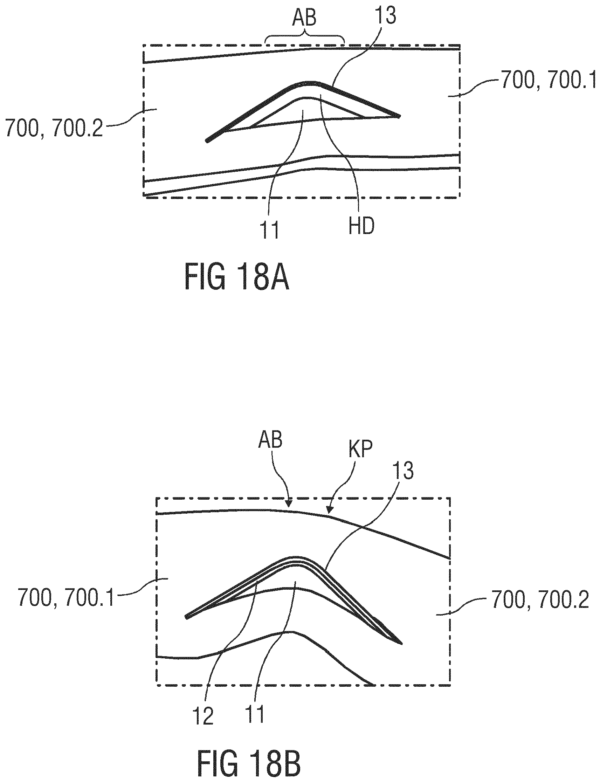

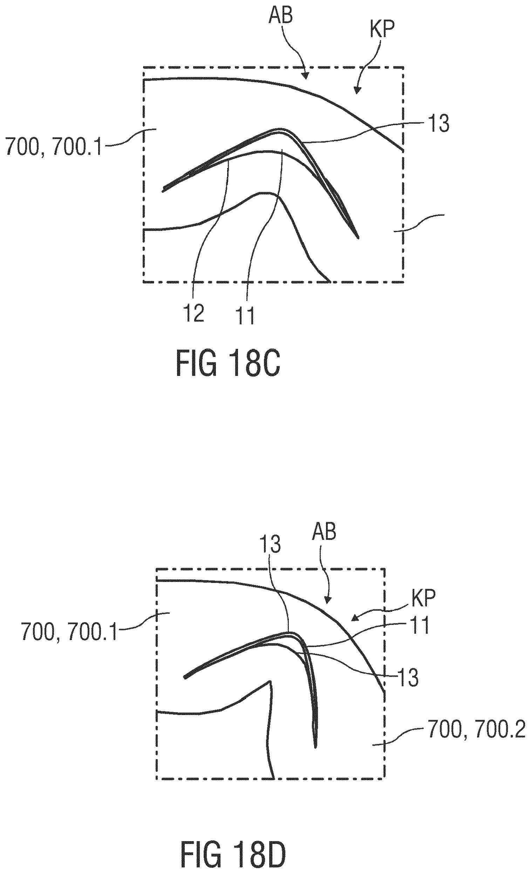

Die **Figuren 18A bis 19** zeigen eine innenliegende Anordnung der Hebelstruktur 12 in einer Durchgangsöffnung 11 der Polsterung 700.

In der Position P1 gibt die Hebelstruktur 12 den Knickpunkt KP für die Polsterung 700, einem Polster-, insbesondere Schaumkissen, an und verlagert die horizontale Drehachse HD der flexiblen Struktur 5 möglichst nah an die Oberfläche.

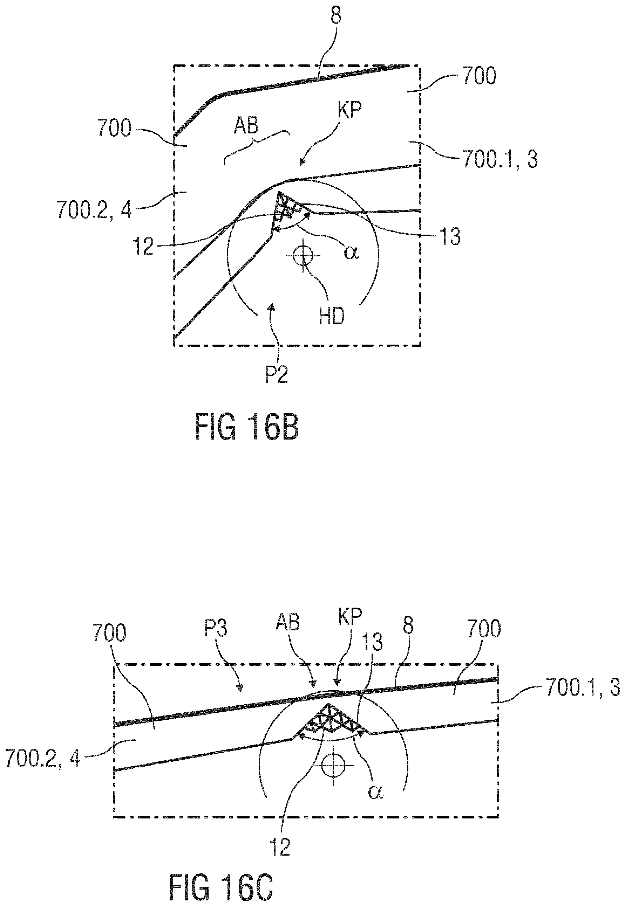

Um dem entgegenzuwirken, weist die Polsterung 700 unterhalb des Knickpunktes KP die keilförmige Aussparung 13 auf, die in **Figur 16B** teilweise geöffnet und in **Figur 16C** vollständig geöffnet dargestellt ist. In diesen Positionen P2 und P3 ist die Hebelstruktur 12 teilweise bzw. vollständig gestreckt oder expandiert, wodurch die Polsterung 700, insbesondere der Schaum, weitestgehend seine Form behält und gleichzeitig in Zugrichtung stabilisiert ist.

Die flexible Hebelstruktur 12 ist hierzu aus einem flexiblen Kunststoffmaterial, beispielsweise aus Polypropylen, gebildet.

In **Figur 16B** sind die angrenzenden Polsterungsbereiche 700.1 und 700.2 in einem Winkel α von größer 90° zueinander angeordnet und befinden sich somit in der Position P2, einer geneigten Sitzposition des Sitzes S. Die flexible Hebelstruktur 12 ist teilweise expandiert oder gestreckt und die keilförmige Aussparung 13 entsprechend teilweise geöffnet.

In **Figur 16C** sind die angrenzenden Polsterungsbereiche 700.1 und 700.2 in einem Winkel α von circa 180° zueinander angeordnet und befinden sich somit in der Position P3, einer Liege- oder Bettposition des Sitzes S, und bilden eine ebene Oberfläche. Die flexible Hebelstruktur 12 ist vollständig expandiert und die keilförmige Aussparung 13 entsprechend vollständig geöffnet.

Die Größe der keilförmigen Aussparung 13 und dessen Winkel α ändern sich somit relativ zur Bewegung des Polsterungsbereiches 700.2 für die Fußabstützung 4 und relativ zum Polsterungsbereich 700.1 für das Sitzteil 3.

Die flexible Hebelstruktur 12 ist beispielsweise gitterförmig (Figuren 16A bis 16C), rautenförmig (Figuren 17A bis 17B) oder flügelförmig aus einer Mehrzahl von Gliedern, Gelenken und Hebeln gebildet. Die Gelenke sind insbesondere Festkörpergelenke. In der Position P1, in welcher die flexible Hebelstruktur 12 komprimiert ist, liegen die Glieder und Hebel der Hebelstruktur 12 parallel nebeneinander, wie in Figur 16A dargestellt. In den Positionen P2 und P3 ist die flexible Hebelstruktur 12 teilweise oder vollständig gestreckt oder expandiert und das flexible Gitter entsprechend geöffnet zur Abstützung des Knickpunktbereiches.

Die keilförmige Aussparung 13 kann dabei als eine einseitige Einkerbung in die Polsterung 700 eingebracht sein, wie in den Ausführungsbeispielen in **Figuren 16A bis 17B** gezeigt.

In einer weiteren Ausführungsform sind die Parameter und Eigenschaften der Polsterung 700, der flexiblen Struktur 5, die Schaumdicke, das Design und die Radien frei skalierbar und können angepasst werden.

Das Bezugselement 8 kann durch nicht näher dargestellte Trennöffnungen in der Polsterung 700 mit der flexiblen Struktur 5 verbunden und an dieser gehalten sein.

**Figuren 17A und 17B** zeigen schematisch in Seitenansicht eine Ausführungsform für die Polsterung 700 mit einer keilförmigen Aussparung 13 in Form einer einseitigen Einkerbung und einer rechteck-, insbesondere rautenförmigen Hebelstruktur 12 im Knickpunktbereich im teilweise komprimierten Zustand bzw. gestreckten oder expandierten Zustand.

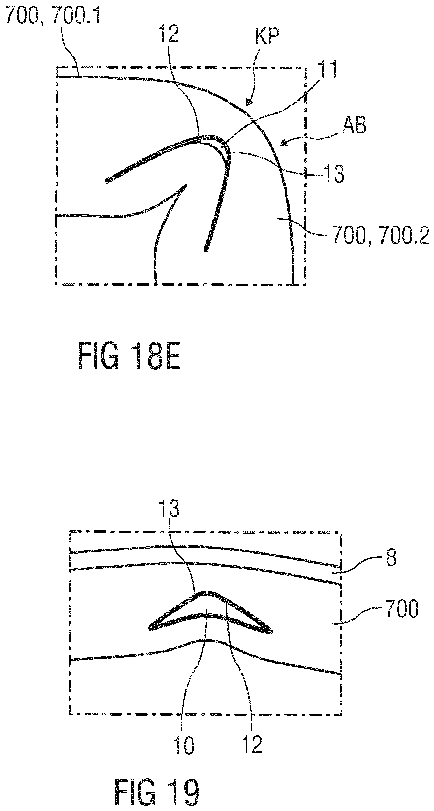

**Figuren 18A bis 18E** zeigen schematisch in Seitenansicht eine Ausführungsform für eine Polsterung 700 mit einer inneren keilförmigen Aussparung 13 und einer dreiecksförmigen Hebelstruktur 12 im Knickpunktbereich in den verschiedenen Positionen P1 bis P3 mit vollständig komprimierter oder gestauchter Hebelstruktur 12 **(****Figur 18A****)** bis zur vollständig gestreckten oder expandierten Hebelstruktur 12 **(****Figur 18E****).** Dabei ist die keilförmige Aussparung 13 als eine Durchgangsöffnung 11 mit einem dreiecksförmigen Querschnitt in die Polsterung 700 im Knickpunktbereich eingebracht. Die Hebelstruktur 12 ist als ein flacher einfacher Biegehebel, zum Beispiel ein Feder- oder Metallband, ausgebildet.

**Figur 19** zeigt schematisch in Seitenansicht die Polsterung 700 mit der inneren keilförmigen Aussparung 13 und der Hebelstruktur 12 im Knickpunktbereich sowie mit dem Bezugselement 8 auf der Polsterung 700.

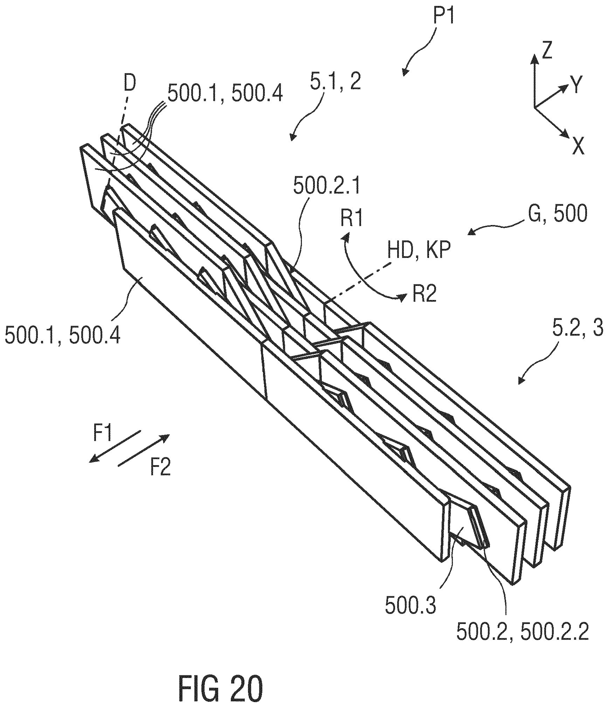

**Figuren 20 bis 23** zeigen schematisch in verschiedenen Darstellungen eine weitere beispielhafte Ausführungsform für eine flexible Struktur 500 für ein Strukturbauteil 1 mit einem Schwenk- oder Knickpunkt KP zwischen zwei Strukturbereichen 1.1 und 1.2, welche relativ zueinander um den Knickpunkt KP schwenkbar oder neigbar sind.

Die flexible Struktur 500 umfasst eine Mehrzahl von Gliedern 500.1, Gelenken 500.2 und/oder Hebelelementen 500.3, welche miteinander bewegungsgekoppelt verbunden sind, um in mindestens einem, insbesondere in mindestens zwei oder mehr Freiheitsgraden F1, F2, R1 und/oder R2 zu komprimieren bzw. zu expandieren.

Insbesondere kann das kinetische Strukturbauteil 1 als Monolith aus der flexiblen Struktur 500 gebildet sein. Die flexible Struktur 500 ist beispielsweise ein flexibles Gitter G mit Hebelelementen 500.3, die mittels Gelenken 500.2 mit horizontaler Drehachse HD im Bereich des Knickpunktes KP und mit vertikaler Drehachse VD oder geneigter Drehachse D im Bereich der Anlenkung der Hebelelemente 500.3 an den Gliedern 500.1, insbesondere an Längselementen 500.4, angelenkt sind.

Dabei kann die flexible Struktur 500 aus einem immer wiederkehrenden mechanischen Hebelelement 500.3 gebildet sein, wobei die Hebelelemente 500.3 zu einem Gitter G verbunden sind, das linear expandiert oder komprimiert.

Die Hebelelemente 500.3 sind beispielsweise rautenförmig angeordnet. Insbesondere ist das immer wiederkehrende Hebelelement 500.3 derart zwischen Längselementen 500.4 angeordnet, dass das Gitter G entlang der Längselemente 500.4 in teilweise oder vollständig expandierter Stellung zueinander gespiegelte Vierecke, insbesondere Rauten R bildet, welche in Abhängigkeit von einer einwirkenden und gesteuerten Kraft ihre Form verändern und sich bewegen, insbesondere linear expandieren oder linear komprimieren. Die jeweilige Raute R ist dabei durch parallele und voneinander beabstandete Längselemente 500.4 gebildet, welche durch die Hebelelemente 500.3, zum Beispiel planare Stege, miteinander verbunden sind, die an den Längselementen 500.4 angelenkt sind. Die wiederkehrenden Hebelelemente 500.3 zwischen den Längselementen 500.4 bilden eine parallele und serielle Kinematik, wodurch das Strukturbauteil 1 linear expandiert oder linear komprimiert.

Das eine Ende des jeweiligen Hebelelements 500.3 oder des jeweiligen Steges von zueinander gespiegelten Rauten R ist zur Mitte hin mit einem mittleren, steuerbaren Längselement 500.4.1 oder einem Mittelteil, insbesondere einem Steuerteil, verbunden. Das steuerbare Längselement 500.4.1 bildet die Spiegelachse der zueinander gespiegelten Rauten R.

Das gegenüberliegende Ende des jeweiligen Hebelelements 500.3 von zueinander gespiegelten Rauten R ist mit einem äußeren Längselement 500.4.2 oder einer Rautenaußenfläche verbunden, die wiederum mit dem nächsten Hebelelement 500.3 verbunden ist oder eine Außenfläche AF des Gitters G und damit die flexible Struktur 5 bildet.

Dabei sind die Enden des Hebelelements 500.3 am jeweiligen Längselement 500.4 angelenkt. Hierzu sind an jedem Ende des Hebelelements 500.3 Gelenke 500.2 vorgesehen. Diese Gelenke 500.2 sind beispielsweise Festkörpergelenke 500.2.2, die monolithisch mit den Längselementen 500.4, beispielsweise durch eine Verjüngung oder Einkerbung 500.2.1, gebildet sind. Mittels des Gelenks 500.2 sind die Hebelelemente 500.3 relativ zum jeweiligen Längselement 500.4 um eine vertikale Drehachse VD oder geneigte Drehachse D schwenk- oder drehbar.

Insbesondere im Knickpunkt KP können als Gelenke 500.2 auch mehrteilige Drehgelenkte 500.2.3 vorgesehen sein.

Da die Rautenaußenflächen der Hebelelemente 500.3, d. h. die äußeren Längselemente 500.4.2 einer Raute R, linear expandieren, können mehrere Rauten R mit ihren äußeren Längselementen 500.4.2 zu einem expandierenden Gitter G verbunden werden. Dabei können die Rauten R in Längsausdehnung des Strukturbauteils 1, in Reihe und in Querausdehnung nebeneinander angeordnet sein.

Expandiert das Gitter G und damit die flexible Struktur 500, bewegen sich die steuerbaren Längselemente 500.4.1 und damit die jeweiligen Mittelteile der Rauten R 90° zur Expansion. Steuert man die Bewegung der Mittelteile an, expandiert oder komprimiert das gesamte Gitter G und somit die flexible Struktur 500.

Die Rauten R und damit das Gitter G können beliebig skaliert werden, so dass es möglich ist, die Expansion oder Komprimierung und die Stabilität dem gewünschten Einsatz oder der gewünschten Anwendung des Strukturbauteils 1 anzupassen.

Wird das Strukturbauteil 1 mit der inneren und zuvor beschriebenen flexiblen Struktur 500 für einen Sitz S, insbesondere einen Fahrzeug- oder Flugzeugsitz verwendet, wobei der komplette Sitz S aus einer monolithischen flexiblen Struktur 500 mit Strukturbereichen 1.1, 1.2, beispielsweise für ein Sitzteil 3 und eine Fußabstützung 4 gebildet ist, so kann die Expansion oder Komprimierung der monolithischen flexiblen Struktur 500 und somit eine Verstellung des Sitzes S in eine gewünschte Position P1 bis P3 durch eine Bewegung der Fußabstützung 4 zum Sitzteil 3 (in **Figuren 2 bis 4** dargestellt) und/oder der Rückenlehne 2 zum Sitzteil 3 gesteuert werden.

**Figur 20** zeigt beispielhaft als Position P1 eine Liegeposition, in welcher die flexible Struktur 500 komprimiert ist. Die flexible Struktur 500 bildet eine weitgehend durchgehende ebene Fläche. Die Rauten R sind weitgehend geschlossen und die gelenkig gelagerten Hebelelemente 500.3 sind im Wesentlichen parallel zu den Längselementen 500.4 angeordnet.

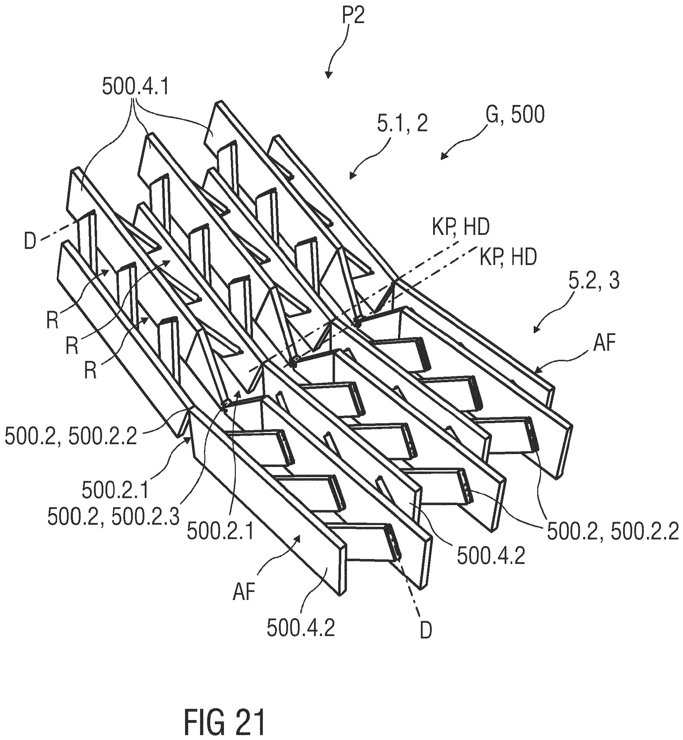

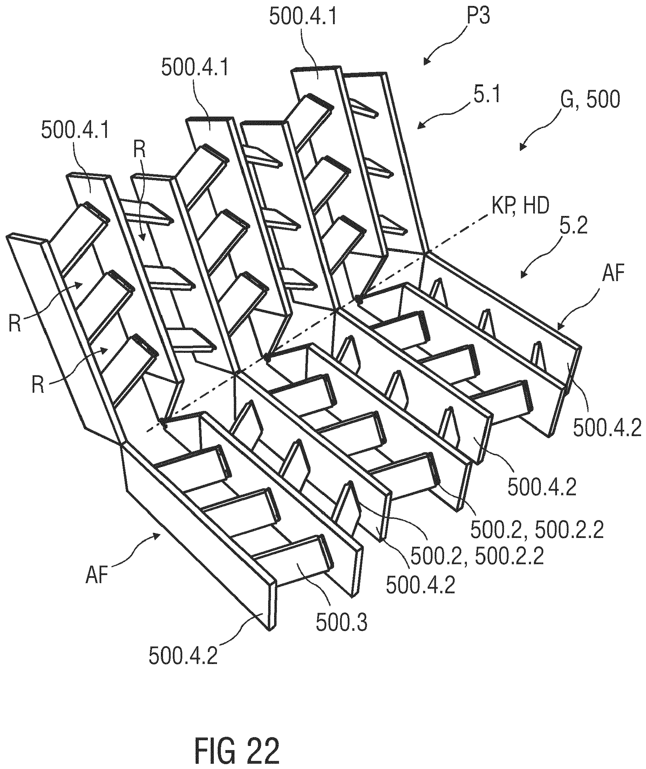

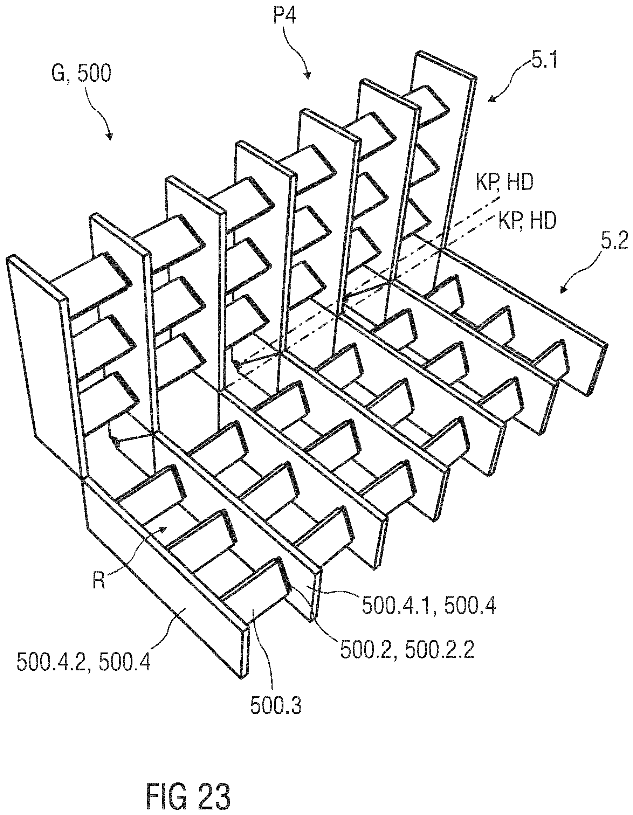

**Figuren 21** **und** **22** zeigen jeweils eine teilweise expandierte Position P2 bzw. P3, in welcher Teilstrukturen 5.1, 5.2 der flexiblen Struktur 500 relativ zueinander geneigt bzw. stärker geneigt sind. **Figur 23** zeigt die flexible Struktur 500 in einer vollständig expandierten Stellung und in einer Position P4, in welcher die Teilstrukturen 5.1, 5.2 zueinander in einem Winkelbereich von 85° bis 90° angeordnet sind. Insbesondere bei einer 90°-Anordnung der Teilstrukturen 5.1, 5.2 zueinander, stehen die Hebelelemente 500.3 weitgehend senkrecht zu den Längselementen 500.4.

Das jeweilige Längselement 500.4, insbesondere das steuerbare Längselement 500.4.1, aber auch die äußeren Längselemente 500.4.2 sind unterteilt, um den Knickpunkt KP für das Strukturbauteil 1 zu bilden. Mit anderen Worten: Die Längselemente 500.4 bilden Längshebel. In dem Bereich des Knickpunktes KP weist das jeweilige Längselement 500.4 ein Gelenk 500.2, insbesondere ein Festkörpergelenk, auf. Das Gelenk 500.2 weist zum Beispiel eine einseitige Verjüngung oder Einkerbung 500.2.1 auf, um im Knickpunkt KP eine horizontale Drehachse HD, die senkrecht zur Längsausdehnung des jeweiligen Längselements 500.4 verläuft, zu bilden.

Beispielsweise sind die Längselemente 500.4 bei dem Strukturbauteil 1 für den Sitz S im Übergangsbereich zwischen Rückenlehne 2 und Sitzteil 3 oder zwischen Sitzteil 3 und Fußabstützung 4 unterteilt und mit einem zugehörigen Gelenk 500.2, zum Beispiel einem Festkörpergelenk 500.2.2, versehen.

Wenn man die Längshebel oder Längselemente 500.4 der Rauten R im Knickpunkt KP jeweils gegeneinander anordnet, kann der Weg den die horizontale Drehachse HD vorgibt, die flexible Struktur 500 expandieren oder komprimieren lassen. Der linear expandierende Teil, insbesondere die äußeren Längselemente 500.4.2 der Rauten R und des Gitters G, hat seinen Knickpunkt KP näher an der eigentlichen horizontalen Drehachse HD der flexiblen Struktur 500.

Das steuerbare Längselement 500.4.1 hat seinen Schwenk- oder Knickpunkt KP weiter von der horizontalen Drehachse HD entfernt. Das hat zur Folge, dass die Expansion der flexiblen Struktur 500 und damit des Gitters G mit der Bewegung der Fußabstützung 4 zum Sitzteil 3 interagiert.

Zur Steuerung des steuerbaren Längselements 500.4.1 kann ein separater Antrieb 9 vorgesehen sein, um die Bewegung des steuerbaren Längselements 500.4.1 und daraus resultierend die Expansion oder Komprimierung der flexiblen Struktur 500 entsprechend zu steuern.

### Bezugszeichenliste

- 1: Strukturbauteil
- 1.1, 1.2: Strukturbereiche
- 1.3: Seitenwangen
- 1.4: Lendenabstützung
- 2: Rückenlehne
- 3: Sitzteil
- 4: Fußabstützung
- 5, 50, 500: flexible Struktur
- 5.1, 5.2: flexible Teilstruktur
- 5.3: Expansionselement
- 5.4: Gelenk
- 50.1, 500.1: Glied
- 50.2, 500.2: Gelenk
- 50.2.1, 500.2.1: Einkerbung
- 50.2.2, 500.2.2: Festkörpergelenk
- 50.2.3, 500.2.3: Drehgelenk
- 50.3, 500.3: Hebelelement
- 50.4, 500.4: Längselement
- 50.4.1, 500.4.1: steuerbares Längselement
- 50.4.2, 500.4.2: Äußeres Längselement
- 6: Flächenelement
- 6.1, 6.2: flexibles Flächenelement
- 7, 70, 700: Polsterung
- 700.1, 700.2: Polsterungsbereich
- 8: Bezugselement
- 9: Antrieb
- 10: Knicklinie
- 11: Durchgangsöffnung
- 12: Hebelstruktur
- 13: Keilförmige Aussparung

- A: Abdeckung
- AB: angrenzender Bereich
- AF: Außenfläche
- D: geneigte Drehachse
- DR: Doppelreihe
- G: Gitter
- F1, F2: Freiheitsgrad
- HD: horizontaler Drehachse
- KP: Knickpunkt
- KU: Kurve
- L: Länge
- OF: Oberfläche
- P1-P3: Position
- PF1, PF2: Pfeil
- R: Raute
- R0, RH1, RH2: Reihe
- R1, R2: Rotationsfreiheitsgrad
- RB: rotatorische Bewegung
- S: Sitz
- ST1 bis ST4: Expansionsstufen
- S1 bis Sn: Schichten
- T: Tragstruktur
- T1: lineare Bewegung
- VD: vertikale Drehachse

## Patentansprüche

1. Strukturbauteil (1), insbesondere ein kinetisches Strukturbauteil, welches eine flexible Struktur (5, 50, 500) mit mindestens einem Freiheitsgrad (F1, F2, R1, R2) umfasst, wobei
- die flexible Struktur (5, 50, 500) zwischen einer komprimierten Stellung und einer expandierten Stellung oder umgekehrt bewegbar ist, und
- wobei die flexible Struktur (5, 50, 500) mindestens eine Teilstruktur (5.1, 5.2) umfasst, die eingerichtet ist, in der expandierten Stellung der flexiblen Struktur (5, 50, 500) zu einer Kurve (KU) oder einem Bogen und/oder linear zu expandieren,
- wobei die Teilstruktur (5.1, 5.2) als ein flexibles Gitter (G) mit mehreren Hebelelementen (50.3, 500.3) ausgebildet ist,
**dadurch gekennzeichnet, dass** die Hebelelemente (50.3, 500.3) mittels Gelenken (5.4, 50.2, 500.2) an mindestens einem Bewegungsglied (50.1, 500.1) angelenkt sind, wobei die Gelenke (5.4, 50.2, 500.2) als Filmscharniere oder Filmgelenke aus Polypropylen ausgebildet sind.

2. Strukturbauteil (1) nach Anspruch 1, wobei die Teilstruktur (5.1, 5.2) eine Mehrzahl von Expansionselementen (5.3) umfasst, welche in Reihe (R0, RH1, RH2) und/oder parallel miteinander gelenkig gekoppelt sind, um in dem mindestens einen Freiheitsgrad (F1, F2, R1, R2) in die expandierte Stellung zu expandieren oder in die komprimierte Stellung zu komprimieren

3. Strukturbauteil (1) nach Anspruch 1 oder 2, wobei die flexible Struktur (5, 50, 500) als eine monolithische flexible Struktur ausgebildet ist.

4. Strukturbauteil (1) nach einem der vorhergehenden Ansprüche, wobei das Bewegungsglied schmalförmig und/oder flächenförmig ausgebildet ist.

5. Strukturbauteil (1) nach einem der vorhergehenden Ansprüche, wobei die flexible Struktur (5, 50, 500) zumindest ein oder mehrere/s äußere/s Flächenelement/e (6) umfasst, das bzw. die mit der Teilstruktur (5.1, 5.2) bewegungsgekoppelt ist bzw. sind.

6. Strukturbauteil (1) nach einem der vorhergehenden Ansprüche, wobei die Hebelelemente (50.3, 500.3) unterschiedliche Längen (L) aufweisen, so dass die in einer Reihe (R0, RH1, RH2) angeordneten und/oder parallel zueinander Hebelelemente (50.3, 500.3) im expandierten Zustand bogen- oder kurvenförmig aufspannen.

7. Strukturbauteil (1) nach einem der vorhergehenden Ansprüche, wobei die Hebelelemente (50.3, 500.3) gleiche Längen (L) aufweisen, so dass die in einer Reihe (R0, RH1, RH2) angeordneten und/oder parallel zueinander Hebelelemente (50.3, 500.3) im expandierten Zustand linear aufspannen.

8. Strukturbauteil (1) nach einem der vorhergehenden Ansprüche 2 bis 5, wobei die Teilstruktur (5.1, 5.2) aus mehreren wiederkehrenden mechanischen Expansionselementen (5.3), insbesondere Hebelelementen (50.3, 500.3), gebildet ist, die zu einer Reihe (R0, RH1, RH2), insbesondere mittels Glieder (50.1, 500.1), verbunden sind.

9. Strukturbauteil (1) nach einem der vorhergehenden Ansprüchen 2 bis 8, wobei die Teilstruktur (5.1, 5.2) aus Mehrfachreihen von Expansionselementen (5.3) aus übereinander und/oder nebeneinander angeordneten einzelnen Reihen (R0, RH1, RH2) von Expansionselementen (5.3) gebildet ist.

10. Strukturbauteil (1) nach einem der vorhergehenden Ansprüche, wobei die Teilstruktur (5.1, 5.2) derart mit dem oder den äußeren Flächenelement/en (6) bewegungsgekoppelt ist, dass in Abhängigkeit von einer auf das oder die Glieder (50.1, 500.1) der Teilstruktur (5.1, 5.2) einwirkenden und gesteuerten Kraft die Teilstruktur (5.1, 5.2) ihre Form, insbesondere ihr Volumen, verändert und sich bewegt, insbesondere expandiert, oder komprimiert.

11. Sitzkomponente, insbesondere Rückenlehne (2) oder Sitzteil (3), wobei die Sitzkomponente zumindest:
- eine Tragstruktur (T),
- eine Polsterung (7, 70 700) und/oder ein Bezugselement (8) sowie
- ein Strukturbauteil (1) nach einem der vorhergehenden Ansprüche 1 bis 10 umfasst, wobei zumindest die Teilstruktur (5.1, 5.2) mit der Polsterung (7, 70, 700) bzw. dem Bezugselement (8) bewegungsgekoppelt ist.

12. Sitzkomponente nach Anspruch 11, wobei das Bewegungsglied mit der Polsterung (7, 70, 700) und/oder dem Bezugselement (8) bewegungsgekoppelt ist.

13. Sitzkomponente nach Anspruch 11 oder 12, wobei das Strukturbauteil (1) zwischen der Tragstruktur (T) und der Polsterung (7, 70, 700) und/oder dem Bezugselement (8) angeordnet ist.

14. Sitz (S), umfassend mindestens zwei relativ zueinander bewegliche Sitzkomponenten, von denen zumindest eine der Sitzkomponenten ein Strukturbauteil (1) nach einem der Ansprüche 1 bis 10 umfasst, wobei bei einer Bewegung der beweglichen Sitzkomponente relativ zu der anderen Sitzkomponente die flexible Struktur (5, 50) in eine expandierte oder in eine komprimierte Stellung bewegbar ist.

## Claims

1. Structural component (1), in particular a kinetic structural component, which comprises a flexible structure (5, 50, 500) having at least one degree of freedom (F1, F2, R1, R2), wherein
- the flexible structure (5, 50, 500) is movable between a compressed position and an expanded position or vice versa, and
- wherein the flexible structure (5, 50, 500) comprises at least one substructure (5.1, 5.2) which is configured, in the expanded position of the flexible structure (5, 50, 500), to expand to form a curve (KU) or an arc and/or in a linear manner,
- wherein the substructure (5.1, 5.2) is designed as a flexible grid (G) having a plurality of lever elements (50.3, 500.3),
**characterized in that** the lever elements (50.3, 500.3) are articulated on at least one moving link (50.1, 500.1) by joints (5.4, 50.2, 500.2), wherein the joints (5.4, 50.2, 500.2) are designed as film hinges or film joints made from polypropylene.

2. Structural component (1) according to Claim 1, wherein the substructure (5.1, 5.2) comprises a plurality of expansion elements (5.3) which are coupled in an articulated manner to one another in a row (R0, RH1, RH2) and/or in parallel in order, in the at least one degree of freedom (F1, F2, R1, R2), to expand into the expanded position or to compress into the compressed position.

3. Structural component (1) according to Claim 1 or 2, wherein the flexible structure (5, 50, 500) is designed as a monolithic flexible structure.

4. Structural component (1) according to one of the preceding claims, wherein the moving link is designed to be narrow and/or flat.

5. Structural component (1) according to one of the preceding claims, wherein the flexible structure (5, 50, 500) comprises at least one or more outer surface elements (6) coupled in terms of movement to the substructure (5.1, 5.2).

6. Structural component (1) according to one of the preceding claims, wherein the lever elements (50.3, 500.3) have different lengths (L), and therefore the lever elements (50.3, 500.3), which are arranged in a row (R0, RH1, RH2) and/or parallel to one another, spread out in an arcuate or curved manner in the expanded state.

7. Structural component (1) according to one of the preceding claims, wherein the lever elements (50.3, 500.3) have identical lengths (L), and therefore the lever elements (50.3, 500.3), which are arranged in a row (R0, RH1, RH2) and/or parallel to one another, spread out linearly in the expanded state.

8. Structural component (1) according to one of the preceding Claims 2 to 5, wherein the substructure (5.1, 5.2) is formed from a plurality of recurring mechanical expansion elements (5.3), in particular lever elements (50.3, 500.3), which are connected, in particular by links (50.1, 500.1), to form a row (R0, RH1, RH2).

9. Structural component (1) according to one of the preceding Claims 2 to 8, wherein the substructure (5.1, 5.2) is formed from multiple rows of expansion elements (5.3) consisting of individual rows (R0, RH1, RH2) of expansion elements (5.3) arranged one above another and/or next to one another.

10. Structural component (1) according to one of the preceding claims, wherein the substructure (5.1, 5.2) is coupled in terms of movement to the outer surface element(s) (6) in such a manner that the substructure (5.1, 5.2) changes its shape, in particular its volume, and moves, in particular expands, or compresses, depending on a controlled force acting on the link or the links (50.1, 500.1) of the substructure (5.1, 5.2).

11. Seat component, in particular backrest (2) or seat part (3), wherein the seat component comprises at least:
- a supporting structure (T),
- padding (7, 70, 700) and/or a cover element (8), and
- a structural component (1) according to one of the preceding Claims 1 to 10, wherein at least the substructure (5.1, 5.2) is coupled in terms of movement to the padding (7, 70, 700) or to the cover element (8) .

12. Seat component according to Claim 11, wherein the moving link is coupled in terms of movement to the padding (7, 70, 700) and/or to the cover element (8).

13. Seat component according to Claim 11 or 12, wherein the structural component (1) is arranged between the supporting structure (T) and the padding (7, 70, 700) and/or the cover element (8).

14. Seat (S), comprising at least two seat components which are movable relative to one another and of which at least one of the seat components comprises a structural component (1) according to one of Claims 1 to 10, wherein, when the movable seat component moves relative to the other seat component, the flexible structure (5, 50) is movable into an expanded or a compressed position.

## Revendications

1. Composant structurel (1), notamment composant structurel cinétique, qui comprend une structure flexible (5, 50, 500) avec au moins un degré de liberté (F1, F2, R1, R2),
- la structure flexible (5, 50, 500) pouvant être déplacée entre une position comprimée et une position expansée ou inversement, et
- la structure flexible (5, 50, 500) comprenant au moins une structure partielle (5.1, 5.2) qui est adaptée pour s'expanser dans la position expansée de la structure flexible (5, 50, 500) en une courbe (KU) ou un arc et/ou de manière linéaire,
- la structure partielle (5.1, 5.2) étant réalisée sous la forme d'une grille flexible (G) avec plusieurs éléments de levier (50.3, 500.3),
**caractérisé en ce que** les éléments de levier (50.3, 500.3) sont articulés au moyen d'articulations (5.4, 50.2, 500.2) sur au moins un organe de mouvement (50.1, 500.1), les articulations (5.4, 50.2, 500.2) étant réalisées sous forme de charnières à film ou d'articulations à film en polypropylène.

2. Composant structurel (1) selon la revendication 1, dans lequel la structure partielle (5.1, 5.2) comprend une pluralité d'éléments d'expansion (5.3) qui sont couplés de manière articulée en rangée (R0, RH1, RH2) et/ou en parallèle les uns aux autres afin de s'expanser dans la position expansée ou de se comprimer dans la position comprimée dans l'au moins un degré de liberté (F1, F2, R1, R2).

3. Composant structurel (1) selon la revendication 1 ou 2, dans lequel la structure flexible (5, 50, 500) est réalisée sous la forme d'une structure flexible monolithique.

4. Composant structurel (1) selon l'une quelconque des revendications précédentes, dans lequel l'organe de mouvement est réalisé sous forme étroite et/ou sous forme plane.

5. Composant structurel (1) selon l'une quelconque des revendications précédentes, dans lequel la structure flexible (5, 50, 500) comprend au moins un ou plusieurs éléments de surface extérieurs (6) qui sont couplés en mouvement à la structure partielle (5.1, 5.2).

6. Composant structurel (1) selon l'une quelconque des revendications précédentes, dans lequel les éléments de levier (50.3, 500.3) présentent des longueurs (L) différentes, de telle sorte que les éléments de levier (50.3, 500.3) agencés en une rangée (R0, RH1, RH2) et/ou parallèles les uns aux autres se tendent en forme d'arc ou de courbe à l'état expansé.

7. Composant structurel (1) selon l'une quelconque des revendications précédentes, dans lequel les éléments de levier (50.3, 500.3) présentent des longueurs (L) égales, de telle sorte que les éléments de levier (50.3, 500.3) agencés en une rangée (R0, RH1, RH2) et/ou parallèles les uns aux autres se tendent de manière linéaire à l'état expansé.

8. Composant structurel (1) selon l'une quelconque des revendications 2 à 5 précédentes, dans lequel la structure partielle (5.1, 5.2) est formée de plusieurs éléments d'expansion mécaniques répétitifs (5.3), notamment des éléments de levier (50.3, 500.3), qui sont reliés en une rangée (R0, RH1, RH2), notamment au moyen de maillons (50.1, 500.1).

9. Composant structurel (1) selon l'une quelconque des revendications 2 à 8 précédentes, dans lequel la structure partielle (5.1, 5.2) est formée de rangées multiples d'éléments d'expansion (5.3) composés de rangées individuelles (R0, RH1, RH2) d'éléments d'expansion (5.3) agencées les unes au-dessus des autres et/ou les unes à côté des autres.

10. Composant structurel (1) selon l'une quelconque des revendications précédentes, dans lequel la structure partielle (5.1, 5.2) est couplée en mouvement avec le ou les éléments de surface extérieurs (6) de telle sorte qu'en fonction d'une force agissant sur le ou les maillons (50.1, 500.1) de la structure partielle (5.1, 5.2) et commandée, la structure partielle (5.1, 5.2) modifie sa forme, notamment son volume, et se déplace, notamment s'expanse, ou se comprime.

11. Composant de siège, notamment dossier (2) ou partie d'assise (3), le composant de siège comprenant au moins :
- une structure porteuse (T),
- un rembourrage (7, 70 700) et/ou un élément de revêtement (8), ainsi que
- un composant structurel (1) selon l'une quelconque des revendications 1 à 10 précédentes, au moins la structure partielle (5.1, 5.2) étant couplée en mouvement avec le rembourrage (7, 70, 700) ou l'élément de revêtement (8).

12. Composant de siège selon la revendication 11, dans lequel l'organe de mouvement est couplé en mouvement avec le rembourrage (7, 70, 700) et/ou l'élément de revêtement (8) .

13. Composant de siège selon la revendication 11 ou 12, dans lequel le composant structurel (1) est agencé entre la structure porteuse (T) et le rembourrage (7, 70, 700) et/ou l'élément de revêtement (8).

14. Siège (S), comprenant au moins deux composants de siège mobiles l'un par rapport à l'autre, dont au moins l'un des composants de siège comprend un composant structurel (1) selon l'une quelconque des revendications 1 à 10 ; lors d'un déplacement du composant de siège mobile par rapport à l'autre composant de siège, la structure flexible (5, 50) pouvant être déplacée vers une position expansée ou vers une position comprimée.
